(19) Europäisches Patentamt

European Patent Office

Office européen des brevets

(11) **EP 1 098 509 A1**

(12) **EUROPEAN PATENT APPLICATION**
published in accordance with Art. 158(3) EPC

(43) Date of publication:
09.05.2001 Bulletin 2001/19

(51) Int. Cl.[7]: **H04N 1/44**

(21) Application number: 99909240.6

(86) International application number:
**PCT/JP99/01368**

(22) Date of filing: 18.03.1999

(87) International publication number:
**WO 99/48279 (23.09.1999 Gazette 1999/38)**

(84) Designated Contracting States:
IT

(30) Priority: 19.03.1998 JP 9073198
14.04.1998 JP 12011598
13.07.1998 JP 21201698

(71) Applicant: Seconet Co., Ltd.
Seoul 138-190 (KR)

(72) Inventor:
MAEDA, Masato
SC2 Co., Ltd.
Tokyo 101-0031 (JP)

(74) Representative:
Bardini, Marco Luigi et al
c/o Società Italiana Brevetti
Corso dei Tintori, 25
50122 Firenze (IT)

(54) **FACSIMILE MACHINE**

(57) Facsimile machine comprising non-visible address area data transfer means, which rotates data in a preset area or data transmitted and stored in a non-visible document storage area or a non-visible document address part storage area detected by a detection means 90°, and transfers the rotated data to a visible address storage area; and an image output device that records data in a non-visible area frame memory in a non-visible area of the aforementioned recording paper and records data in the aforementioned visible address storage area in a visible area of the aforementioned recording paper, and where the aforementioned image output device records data in the aforementioned frame memory on the aforementioned recording paper of the aforementioned facsimile receiving paper each time data following the second page of received data stored in the aforementioned received data storage memory is transferred to the non-visible document storage area of the aforementioned frame memory. Facsimile communication with secret documents will be possible without being seen by others.

Fig. 12

**Description**

Technical field

The present invention pertains to a facsimile machine that is used with a facsimile communication system that can maintain secrecy, and in particular, it pertains to a facsimile machine in which double facsimile paper that can maintain secrecy is loaded.

Background technology

The present applicant has proposed Japanese Kokai Patent Application No. Hei 9-71069 (Japanese Patent Application No. Hei 7-260647) and Japanese Patent Application No. Hei 8-267649 as double paper for secret communication.

These inventions have been published internationally as WO/97/09178 (PCT/JP96/02479).

With these double papers, only the address part is printed in a window, there are transparent parts on the sheet and cover that are printed, and the secret information part is printed beneath a shielding sheet. As long as the shielding sheet is not removed, it cannot be seen from the outside, so that secrecy will be maintained.

The aforementioned double facsimile paper can maintain secrecy and is composed of thermal recording paper that has an address recording area and a communication contents recording area, a cover sheet that is placed on the surface of this thermal recording paper which prevents the communication recording area of this thermal recording paper from being seen and an adhesive layer with which this cover sheet can be adhered to the surface of the aforementioned thermal recording paper so that it can be peeled off, and that cannot be readhered after the aforementioned cover sheet has been peeled off. A small pattern is printed on the back of the aforementioned communication contents recording area of the aforementioned thermal paper to prevent the communication contents recorded on the aforementioned communication contents recording area from being read.

In addition, the present applicant has proposed Japanese Kokai Patent Application No. Hei 9-275501 (Japanese Patent Application No. Hei 8-116926), Japanese Kokai Patent Application No Hei 9-331459 (Japanese Patent Application No. 8-185282), and Japanese Patent Application No. Hei 8-263422 as a facsimile communication system that can maintain secrecy using the aforementioned double paper.

Japanese Kokai Patent Application No. Hei 9-275501 uses the aforementioned double paper, rotates only the address part 90°, and displays the output in the address recording area.

Japanese Kokai Patent Application No. Hei 9-331459 deletes the transmission source signal appearing on the facsimile receiving paper.

Japanese Kokai Patent Application No. Hei 9-263422 records page numbers on facsimile receiving paper.

These inventions were further published internationally as WO97/37488 (PCT/JP97/01157).

The present applicant has developed facsimile technology that can maintain secrecy by connecting a dedicated facsimile (SFX), in which roll-type double paper that can maintain secrecy is loaded, to a public communication network, as described in Japanese Kokai Patent Application Nos, Hei 9-275501, Hei 9-331459 and Japanese Patent Application No. Hei 8-263422. However, the problems below (a1)-(a8) have been discovered as problems that still remain with the inventions for which applications had already been filed.

> (a1) Transmission source information is displayed in a visible area of the received document (visible recording address area), so that the secrecy of secret communications cannot be maintained.
> (a2) The address is not displayed in the non-visible area of the received document (secret document area), so that after the received document is received, when it is duplicated on standard paper (ex.: A4), the address is not displayed as in the transmitted document.
> (a3) The address is not accurately displayed in the visible area of the receiving paper (address recording area). That is, when the receiving paper is cut and output at the position where the received document has ended, from the standpoint of saving resources, when the communication message is short (particularly with one-page transmission and reception), the address will not be completely reproduced/recorded.
> (a4) In multiple-page facsimile transmission and reception, the page number displayed in the name area of received documents after the second page will be the same as that of the first page.
> (a5) The address is not accurately displayed in the visible area according to the direction that the received document is read.
> (a6) The image data recording memory of the receiving apparatus increases in multiple-page facsimile transmission and reception.

In consideration of the aforementioned problems, the purpose of the present invention will be the implementation of (b1) and (b2) below.

> (b1) To display transmission source information only in non-visible areas of the receiving paper (secret document area) in order to maintain secrecy.
> (b2) To display address information accurately in a visible area of the receiving paper.

## Presentation of the invention

### First invention

The facsimile machine of the first invention is characterized by the fact that it is meets the following requirements (A01)-(A06).

(A01) Secret document recording paper loading part (13a), in which is loaded facsimile receiving paper (R100) for recording secret documents, that contains: recording paper (R101), where recording paper (R101) that has non-visible area (R103) in which the received document, including transmission source information can be recorded, and visible area (R102) in which the preset address area part (the received document address area part) on the first page of the aforementioned received document can be recorded and where aforementioned visible area (R102) is placed along one side of aforementioned non-visible area (R103) in the paper-feed direction; and shielding sheet (R104) that covers the non-visible area (R103) of aforementioned recording paper (R101).

(A02) Memory (9) that has received data accumulating memory (9a) that accumulates the aforementioned received data and frame memory (F101) that records data for one page of aforementioned facsimile receiving paper (R100); aforementioned memory (9) where frame memory (F101)is constituted with non-visible area frame memory (F103) that has non-visible document recording area (F103a) and non-visible transmission source data storage area (F103b), and a visible area frame memory that has visible address storage area (F102a) and visible page number memory area (F102b).

(A03) Received data accumulating means (C1) that accumulates the aforementioned received data in aforementioned received data storage memory (9a).

(A04) Accumulated data transfer means (C2) that transfers data stored in aforementioned received data stored memory (9a) one page at a time to non-visible document storage area (F103a) of aforementioned frame memory (F101); when recording of the data in aforementioned frame memory (F101) on aforementioned facsimile receiving paper (R100) is completed by image output device (13) and there are next data stored in aforementioned received data storage memory (9a), aforementioned accumulated data transfer means (C2) transfers the aforementioned next data to non-visible document storage area (F103a) of aforementioned frame memory (F101).

(A05) Non-visible address area data transfer means (C3) that transfers data from the non-visible document address part memory area (F103a1), which is a preset area in the data transmitted and stored in aforementioned non-visible document storage area (F103a), to visible address recording area (F102a) rotated 90°.

(A06) Image output device (13) that records data from aforementioned non-visible area frame memory (F103) to non-visible area (R103) of aforementioned recording paper (R101) and data from aforementioned visible address storage area (F102a) to aforementioned visible area (R102) of aforementioned recording paper (R101); aforementioned image output device (13), where, each time data after the second page of the received data stored in aforementioned received data storage memory (9a) are transmitted to nonvisible document storage area (F103a) of aforementioned frame memory (F101), data in aforementioned frame memory (F101) are recorded on aforementioned recording paper (R101) of aforementioned facsimile receiving paper (R100).

### Operation of the first invention

With the aforementioned first invention, addresses can be displayed accurately in a visible area of the receiving paper (address recording area). When the received document is duplicated on standard paper (ex.: A4), the address is displayed as is on the transmitted document. Transmission source signals will not be output in the address recording area, and the secrecy of secret communications is maintained, even the letterhead of a received document that contains letterhead will not be displayed in the visible area of the received document, so that the confidentiality of the secret communications can be maintained.

### Embodiment of the first invention

A facsimile machine in an embodiment of the first invention is characterized by the fact that the following requirements (A07) and (A08) are met by the aforementioned first invention.

(A07) Page number recording data generation means (C4) that generates page number recording data for recording the page number of one page of data stored in the aforementioned frame memory in aforementioned visible arcs (R102) of aforementioned recording paper (R101).

(A08) Page number recording data transfer means (C5) that transfers the aforementioned page number recording data to visible page number storage area (F102b) of aforementioned frame memory (F101) before data in aforementioned frame memory (F101)is recorded on aforementioned recording paper (R101) of aforementioned facsimile receiving paper (R100) by aforementioned image output device (13).

With the embodiment of the first invention with the aforementioned constitution, the page numbers displayed in the address area of the received document after the second page will be sequential numbers for multiple-page facsimile transmission and reception,

Second invention

The facsimile machine in the second invention is characterized by the fact that it meets the following requirements (B01)-(B07).

(B01) Secret document recording paper apparatus part (13a), in which is loaded secret document recording facsimile receiving paper (R100) that contains: recording paper (R101), where recording paper (R101) has non-visible area (R103) that can record the transmitted document, including transmission source information, and visible area (R102) in which a preset area part for the first page of the aforementioned received document (received document name area part) can be recorded, and where the aforementioned visible area (R102) is placed along one side of aforementioned non-visible area (R103) in the paper feed direction and shielding sheet (R104) that covers non-visible area (R103) of aforementioned recording paper (R101).

(B02) Memory (9) that includes received data accumulating memory (9a) that stores the aforementioned received data and frame memory (F101) that stores one page of data for aforementioned facsimile receiving paper (R100); aforementioned memory (9) where frame memory (F101) is constituted of non-visible area frame memory (F103) that has non-visible text storage area (F103a) and non-visible transmitted data storage area (F103b), and a visible area frame memory that has visible address storage area (F102a) and visible page number storage area (F102b).

(B03) Received data storage means (C1) that stores the aforementioned received data in aforementioned received data storage memory (9a).

(B04) Accumulated data transfer means (C2) that transfers data stored in aforementioned received data storage memory (9a) one page at a time to non-visible document storage area (F103a) of aforementioned frame memory (F101); when recording of data in aforementioned frame memory (F101) on aforementioned facsimile receiving paper (R100) is completed by image output device (13) and there are next data stored in aforementioned received data stored memory (9a), aforementioned accumulated data transfer means (C2) transfers the aforementioned next data to non-visible document storage area (F103a) of aforementioned frame memory (F101).

(B05) Address part storage area detection means (C6) that has address part storage area specifying graphic storage means (C6a) that stores graphics that specify the range of non-visible document address part storage area (F103a1) from data transmitted and stored in aforementioned non-visible document storage area (F103a), and that detects non-visible document address part storage area (F103a1) from data stored in aforementioned non-visible document storage area (F103a).

(B06) Non-visible address area data transfer means (C3) that transfers the aforementioned detected data in non-visible document address part storage area (F103a1) to visible address storage area (F102a) rotated 90°.

(B07) Image output device (13) that records data from aforementioned non-visible area frame memory (F103) to non-visible area (R103) of aforementioned recording paper (R101) and records the data from aforementioned visible address storage area (F102a) to aforementioned visible area (R102) of aforementioned recording paper (R101); each time data after the second page of the received data stored in aforementioned received data stored memory (9a) is transmitted to non-visible document storage area (F103a) of aforementioned frame memory (F101), aforementioned image output device (13) records data in the aforementioned frame memory (F101) on aforementioned recording paper (R101) of aforementioned facsimile receiving paper (R100).

Operation of the second invention

With the facsimile machine in the second invention with the aforementioned constitution, even if the page on which the address is displayed is not transmitted first, it will be displayed accurately in a visible area of the received document. And the address will be accurately displayed in a visible area regardless of the orientation from which the received document is read.

Embodiment of the second invention

A facsimile machine in an embodiment of the second invention is characterized by the fact that it meets requirements (B08) and (B09) below.

(B08) Page number recording data generation means (C4) that generates page number recording data for recording the page number of one page of data stored in the aforementioned frame memory in aforementioned visible area (R102) of aforementioned recording paper (R101).

(B09) Page number recording data transfer means (C5) that transfers the aforementioned page number recording data to visible page number storage area (F102b) of aforementioned frame memory (F101)before the data in aforementioned frame memory (F101) are recorded on aforementioned recording paper (R101) of aforementioned facsimile receiving paper (R100) by aforementioned image output device (13).

With the embodiment of the second invention with the aforementioned constitution, the page numbers displayed in the address area of the received document after the second page will be sequential numbers in multiple-page facsimile transmission and reception.

Third invention

The facsimile machine in the third invention is characterized by the fact that it meets requirements (C01)-(C06) below.

(C01) Secret document recording paper loading part (13a), in which is loaded secret document recording facsimile receiving paper (R100), that contains recording paper (R101), where recording paper (R101) that has non-visible area (R103) in which the received document, including transmission source information, can be recorded and visible area (R102) in which a preset address area part of the first page of the aforementioned received document (received document address area part) can be recorded, and where the aforementioned visible area (R102) is placed along one side of aforementioned non-visible area (R103) in the paper-feed direction, and shielding sheet (R104) that covers non-visible area (R103) of aforementioned recording paper (R101).

(C02) Memory (9) that includes received data consecutive storage memory (9b) that sequentially receives and stores the aforementioned received data in portions of a prescribed number of lines greater than the amount of data stored in aforementioned visible area (R102) and less than one page of data, line memory (F101), where line memory (F101) stores data where the aforementioned prescribed number of lines of received data are expanded and is constituted of non-visible area frame memory (F103) and visible area frame memory (F102), and visible area buffer memory (FB102) that stores data where aforementioned received data consecutive storage memory (9b) is expanded when the prescribed number of lines of received data stored in aforementioned received data consecutive storage memory (9b) are the initial data on each page.

(C03) Received data successive storage means (C1") that stores the aforementioned received data in aforementioned received data consecutive storage memory (9b) in units of the aforementioned prescribed number of lines.

(C04) Received data transfer means (C2) that transfers the aforementioned received data, excluding the transmission source information data, to aforementioned visible area buffer memory (FB102) and non-visible area line memory (F103) of aforementioned line memory (F101) when the data stored in aforementioned received data consecutive storage memory (9b) is the first data on each page, and that also transmits all the data stored in aforementioned received data consecutive storage memory (9b) to non-visible area line memory (F103) of aforementioned line memory (F101) when the data stored in aforementioned received data consecutive storage memory (9b) are data after the second page of each document; where each time new received data are stored in aforementioned received data consecutive storage memory (9b), aforementioned received data transfer means (C2) transfers the aforementioned new received data to aforementioned non-visible area line memory (F103) or visible area buffer memory (FB102).

(C05) Buffer data transfer means (C3) that sequentially transfers data transmitted and stored in aforementioned visible area buffer memory (FB102) to visible area line memory (F102) rotated 90°.

(C06) Image output device (13) that records data in aforementioned non-visible area line memory (F103) in non-visible area (R103) of aforementioned recording paper (R101) and that records data in aforementioned visible area line memory (F102) in aforementioned visible area (R102) of aforementioned recording paper (R101); each time received data stored in aforementioned received data memory (9b) are transmitted to aforementioned frame memory (F101), aforementioned image output device (13) stores data in aforementioned frame memory (F101) on aforementioned recording paper (R101) of aforementioned facsimile receiving paper (R100).

Operation of the third invention

With the facsimile machine in the third invention with the aforementioned constitution, image data memory capacity of the receiving device can be economized, and low cost and high performance can be realized. Page numbers displayed in the address area of the received document after the second sheet will be different, and the page number of each page will be reproduced/recorded in a visible area. The transmission source signal will not be displayed in a visible area, and the confidentiality of secret communications is maintained.

Embodiment 1 of the third invention

The facsimile machine in Embodiment 1 of the third invention is characterized by the fact that following requirements (C07) and (C08) are furnished in the aforementioned third invention.

(C07) Page number recording data generation means (C4) that generates page number recording data for recording the page number of one page of data stored in the aforementioned frame memory in aforementioned visible area (R102) of aforementioned recording paper (R101).

(C08) Page number recording data transfer means (C5) that transfers the aforementioned page number recording data to visible page number storage area (F102b) of aforementioned frame memory (F101) before data in aforementioned frame memory (F101) is recorded on aforementioned recording paper (R101) of aforementioned facsimile receiving paper (R100) by aforementioned image output device (13).

With Embodiment 1 of the third invention with the aforementioned constitution, the page numbers displayed in the address area of the received document after the second page will be sequential numbers in multiple-page facsimile transmission and reception.

Embodiment 2 of the third invention

The facsimile machine in Embodiment 2 of the third invention is characterized by the fact that the following requirements (C09)-(C011) are furnished in the aforementioned third invention or Embodiment 1 of the third invention.

(C09) Visible area recording completion judgment means (C7) for when non-visible area recording is completed that determines whether recording of address data (data stored in visible area buffer memory (FB102)) in visible recording area (R102) is completed, when recorded data are recorded on each page of the recording paper when recording to non-visible recording area (R103) is completed.

(C010) Visible area unrecorded part recording execution means (C8) that executes recording of unrecorded parts of address data when recording of address data (data stored in visible area buffer memory (FB102)) in visible recording area (R102) on the last page has been completed, after recording in non-visible recording area (R103) is completed when all pages are recorded.

(C011) that cuts facsimile receiving paper (R100) at the position where recording of non-visible areas and visible areas is completed, when all pages are recorded.

With Embodiment 2 of the third invention with the aforementioned constitution, after recording of data far all pages is completed, the facsimile receiving paper is cut, so that the amount of facsimile receiving paper used can be economized. And all address data are recorded in visible recording areas on each page.

Brief description of the figures

Figure 1 is receiving paper (R100) that has been cut and output after the data in received document (ZD) (a 4-page example) has been converted and reproduced/recorded by receiving device (Rj).

Figure 2 shows multiple received documents with the present invention.

Figure 3 explains the overall constitution of a communication system in which the facsimile machine of the present invention is used. Figure 3A is an overall block diagram of a facsimile communication system that can maintain secrecy, and Figure 3B is a simplified explanatory diagram of signal processing in facsimile transmission and receipt.

Figure 4 explains roll-type double paper for receiving (receiving paper) (R100) that includes recording paper (R101) and shielding sheet (R104). Figure 4(a) shows receiving paper (R100) immediately after receipt, and Figure 4(b) shows where the recipient has partially peeled off shielding sheet (R104).

Figure 5 is a block line diagram that shows the constitution of transceiving device (SR) in Application Example 1.

Figure 6 shows the relationship between initial transmitted document (SD) and final received document (ZD). Figures 6(a)-6(d) show examples of different output of final received documents.

Figure 7 explains how the first page of the transmitted document and the received document are recorded. Figure 7A shows an example of the first page of transmitted document (SD) and Figure 7B shows the document developed in the frame memory (document in recorded form) by editing the first page of received document (ZD).

Figure 8 explains frame memory (F101) in Application Example 1.

Figure 9 explains the relationship between transmitted text from the second page (SD2) and received text (ZD2). Figure 9A shows the transmitted portion of the second page (SD2) and Figure 9B shows the received portion of the second page.

Figure 10 explains page numbers (RN) recorded when multiple-page received documents (ZD) are reproduced/recorded with the technology described in Japanese Patent Application No. Hei 8-263422 by the present applicant.

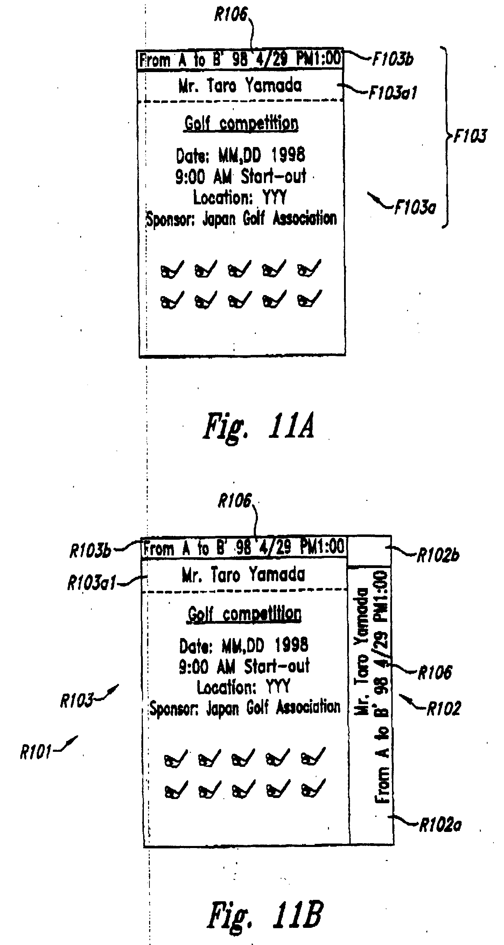

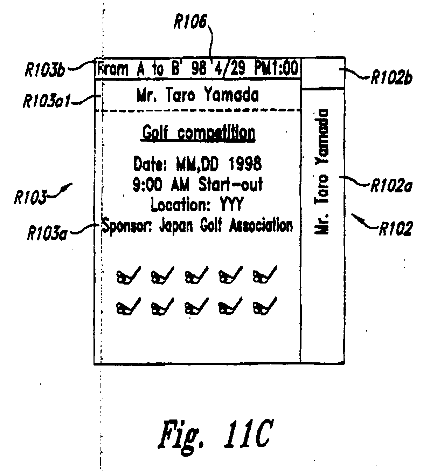

Figure 11 explains how transmission source information is stored and recorded. Figure 11A shows transmission source information stored in non-visible area page memory (F103) and the contents of data in received document (ZD) stored. Figure 11B shows data in non-visible transmitted source data storage area (F103b) and non-visible document address part storage area (F103a1) duplicated in visible area memory (F102) and reproduced/recorded on recording paper (R101). Figure 11C shows only data in non-visible document address part storage area (F103a1) duplicated in visible address storage area (F102a) and then reproduced/recorded.

Figure 12 is a block diagram that shows the functions realized by the CPU and the memory configuration of memory (9) (refer to Figure 5A) in aforementioned Application Example 1.

Figure 13 is a flowchart of reception processing of Application Example 1 of the facsimile machine of the present invention.

Figure 14 is a subroutine for ST8 in aforementioned Figure 13.

Figure 15 shows four methods of reading a four-page transmitted document (SD) with transmitting device (Si).

Figure 16 shows an example of an area detection image for detecting areas where address (AT) it recorded. Figure 16A is a case of transmitted document (SD) with address (AT) enclosed by square graphic (S107). Figure 16B is a cue where it is enclosed by symbol (S108).

Figure 17 shows how data are recorded in frame memory (F101) when the received data is upside-down.

Figure 18 is a block diagram that shows the functions realized by the CPU and memory configuration of memory (9) (refer to Figure 5A) as in aforementioned Application Example 1.

Figure 19 is a flowchart of reception processing by Application Example 2 of the facsimile machine of the present invention.

Figure 20 is a subroutine for ST36 in aforementioned Figure 19.

Figure 21 is a subroutine for ST39 in aforementioned Figure 19.

Figure 22 is a subroutine for ST39' in aforementioned Figure 19.

Figure 23 explains the facsimile machine in Application Example 3.

Figure 24 explains a facsimile machine in Application Example 4.

Figure 25 explains the facsimile machine in Application Example 5. It is a block diagram that shows functions C1-C5 realized by the CPU and the memory configuration of memory (9) (refer to Figure 5A) the same as aforementioned Application Example 1.

Figure 26 explains the facsimile machine in Application Example 5 and explains the configuration of memory (9) in aforementioned Figure 25.

Figure 27 explains a facsimile machine in Application Example 6.

Figure 28 shows the first page of the transmitted document and the first page of the received document in Application Example 6 recorded.

Figure 29 is a block diagram that shows the functions realized by the CPU and the memory configuration of memory (9) (refer to Figure 5A) in aforementioned Application Example 6.

Figure 30 is a flowchart of reception processing by Application Example 6 of the facsimile machine of the present invention.

Figure 31 is a flowchart that is a continuation of aforementioned Figure 30.

Figure 32 is a subroutine for ST89 in aforementioned Figure 30.

Figure 33 explains Application Example 7 of the facsimile machine of the present invention. Figure 33A shows the contents of received document (ZD) and Figure 33B explains the document output method of Application Example 7.

Figure 34 shows pages 1-4 of the received document recorded.

Figure 35 is a block diagram that shows functions C1', C2', C3-C5, and C7-C9 realized by CPU and the configuration of memory (9) (refer to Figure 5A) the same as aforementioned Application Example 1.

Figure 36 is a flowchart of reception processing by Application Example 7 of the facsimile machine of the present invention.

Figure 37 is a flowchart of reception processing by Application Example 7 of the facsimile machine of the present invention and is a flowchart that is a continuation of aforementioned Figure 36.

Figure 38 is a flowchart of processing for cutting facsimile receiving paper.

Optimum embodiments for implementing the invention

Application Example 1

A first application example of a facsimile communication system that can maintain secrecy based on the invention in this application will be explained.

Receiving paper

This application uses double paper as shown in Japanese Kokai Patent Application No. Hei 9-71069 and Japanese Patent Application No. Hei 8-267649 with a facsimile receiving part. First, the structure of the double paper that can maintain secrecy used for the invention in this application will be explained.

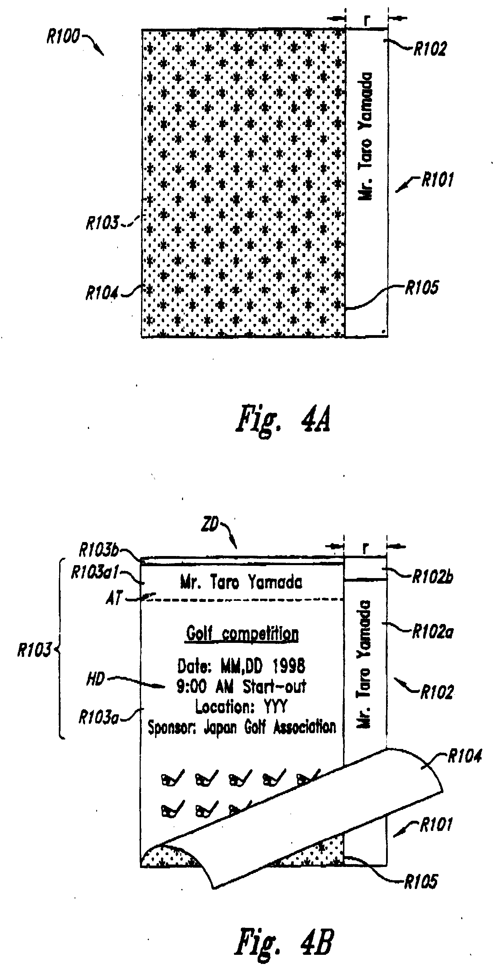

Figure 4 explains roll-type double paper for receiving (receiving paper) (R100) that has recording paper (R101)and shielding sheet (R104). Figure 4(a) shows receiving paper (R100) immediately after reception, and Figure 4(b) shows where the recipient has partially peeled off shielding sheet (R104). In Figure 4, aforementioned recording paper (R101) of receiving paper (R100) has visible recording area (R102) up to a position (boundary R105) at distance (r) from the end of the paper and non-visible recording area (R103) that is the other area.

In Figure 4B visible recording area (R102) of aforementioned recording paper (R101) has visible address recording area (R102a) in which addresses are recorded to be viewed and visible page number recording area (R102b). Aforementioned non-visible recording area (R103) has secret document recording area (R103a) that records secret document (HD) that is the contents of received document (ZD) and transmission source information recording area (R103b). Aforementioned secret document recording area (R103a) includes non-visible address recording area (R103a1) that records address (AT) of the first page of received document (ZD).

Aforementioned receiving paper (double paper for receiving) (R100) has shielding sheet (R104) adhered on known heat-sensitive recording paper (R101) with an adhesive or the like so that it can be peeled off, and once it has been peeled off, it cannot be readhered without using another means. Another means would include using another adhesive, for example. For this reason, when someone besides the addressee has peeled shielding sheet (R104) from the surface of double paper (R100), the addressee can see that someone else has peeled off aforementioned shielding sheet (R104). Thus, the communication contents recorded in non-visible recording area (R103) of double paper for receiving (R100) cannot be read surreptitiously by anyone besides the addressee without the addressee's knowledge.

The actual addressee can read secret-document (HD) recorded in non-visible recording area (R103) of double paper (R100) by peeling shielding sheet (R104) off the surface.

In this Application Example 1, cut double paper can be used in place of roll-type double paper as the aforementioned double paper for receiving (R100).

Printing a pattern is effective as shielding sheet (R104). Experimental results show that if a pattern is also printed on the reverse side of double paper (R100), the shielding effects are more effective. For technology related to this, the present applicant has already filed separate applications, as discussed above, in Japanese Kokai Patent Application No. Hei 9-71069 (Japanese Patent Application No. Hei 7-260647) and Japanese Patent Application No. Hei 8-267649.

Transmitting paper

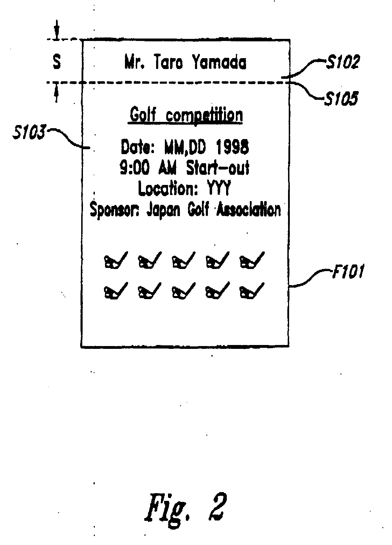

Next, the paper for the facsimile transmitting part will be explained with Figure 2.

In Figure 2, front sheet for transmitting (S101) is used for the first page of the transmitted document has the dimensions of A4 paper, for example.

The transmitted document is written on communication content recording area (S103), and address (AT) is written in address area (S102).

Address area (S102) is at a position that is distance s (with this application example, s = 50 mm) from the top of the paper. With Figure 2, an example where boundary (S105) is furnished is shown. A mark can also be provided as boundary (S105).

Transmitting device (Si), discussed below, reads and transmits secret document (HD) written in communication content recording area (S103) and address (AT) written in address area (S102) unchanged as transmitted document (SD). Receiving device (Rj), discussed below, processes the received image from the top of page 1 of received document (ZD) (refer to Figure 4) to distance s (s =50 mm) as address data.

The functions of facsimile transmitting device (Si), discussed below, other than to write address (AT) of transmitted document (SD) in a preset address area, are the same as for normal facsimile transmission and operation. The aforementioned address area descriptive item is recorded in visible recording area (R102) (refer to Figure 4(b)) when facsimile receiving device (Rj), described below, records the received document on the facsimile receiving paper.

Overall constitution of the communication system

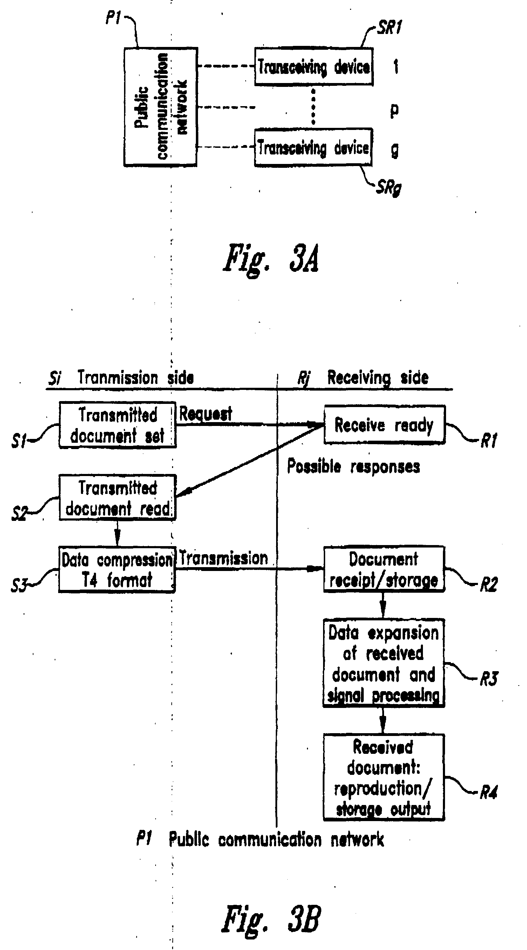

Figure 3 explains the overall constitution of a communication system that uses the facsimile machine of the present invention, Figure 3A is an overall block diagram of a facsimile communication system that can maintain secrecy, and Figure 3B is a summary explanatory diagram of signal processing of facsimile transmission and reception.

In Figure 3A, (P1) is a public communication network, (SR1) is a first transceiving device, and (SRp) is the nth transceiving device.

Multiple transceiving devices (SR) are connected to each other via public communication network (P1). Each transceiving device SRp (p =1~ g [where g is the number of devices]) has the functions of transmitting device (Si) and receiving device (Rj) and is a two-way communication device that transmits data from transmitting device (Si) to receiving device (Rj) (j = 1 ~ m [where m is the number of devices], i ≠ j).

Transmitting device (Si) is a facsimile communication terminal that reads address (AT) and secret document (HD) as transmitted document (SD) data and transmits the data to receiving device (Rj) via public communication network (P1).

Receiving device (Rj) is a facsimile terminal that receives transmitted document (SD) data sent from transmitting device (Si) as received document (ZD). Transmitted data for address (AT) part and secret document (HD) part are reproduced/recorded in visible recording area (R102) (refer to Figure 4) and non-visible recording area (R103), respectively, of roll-type double paper for receiving (R100), which is then cut and output.

This application example is a system that can maintain secrecy even with transmission from a general facsimile, but a general facsimile terminal is omitted in Figure 3.

As the function of aforementioned transmitting device (Si), a method for transmitting after all of transmitted document (SD) is read and image data are stored (here, called "storage type") and a method for transmitting image data while reading transmitted document (SD) (here, called "successive" type) can be considered.

Next, as the function of receiving device (Rj), a method for reproducing/recording image data for transmitted document (SD) while receiving (here, called "successive type") and a method for reproducing/recording after all the image data for transmitted document (SD) have been stored as data for received document (ZD) (here, called "stored type") can be considered.

That is, with facsimile transmission and reception, if the combinations of a storage type transmission and successive type transmission, and storage type reception and successive type reception are considered, there will be four cases. The present invention will be explained as it relates to the stored type at both the transmitting side and the receiving side. But the essential points of the invention in this case can be applied to stored type transmission and successive type transmission as the function of transmitting device (Si). However, it can only be applied to stored type reception and not to successive type reception as the function of receiving device (Rj).

Below, a summary of signal processing in facsimile transmission and reception will be explained according to the flow in Figure 3B.

First, transmitted document (SD) is placed on transmitting device (Si), and it is determined whether receiving device (Rj) is in receive-ready mode to allow transmission via public communication network (P1) (step S1).

Next, receiving device (Rj) sends a receive-ready reply (Step R1).

Next transmitting device (Si), while reading transmitted document (SD) (step S2) compresses the data for transmitted document (SD) data (step S3) according to the T4 format end stores the data in memory (9).

Facsimile standards have been devised according to the recommendations of the CCITT (Consultative Committee on International Telegraphy and Telephony). The aforementioned T4 format conforms to said standards.

Next, transmitting device (Si) transmits transmitted document (SD) data to receiving device (Rj) via public communication network (P1).

Next, receiving device (Rj) stores received document (ZD) data received in T4 format in memory (9) (here, as the same memory (9)) (step R2).

Next, the following signal processing is performed (changing address from vertical to horizontal, adding page numbers, etc.) while received document (ZD) data from memory (9) are expanded (step R3).

Finally, received document (ZD) data are reproduced/recorded and the receiving paper is cut and output (step R4).

Transceiving device (SR)

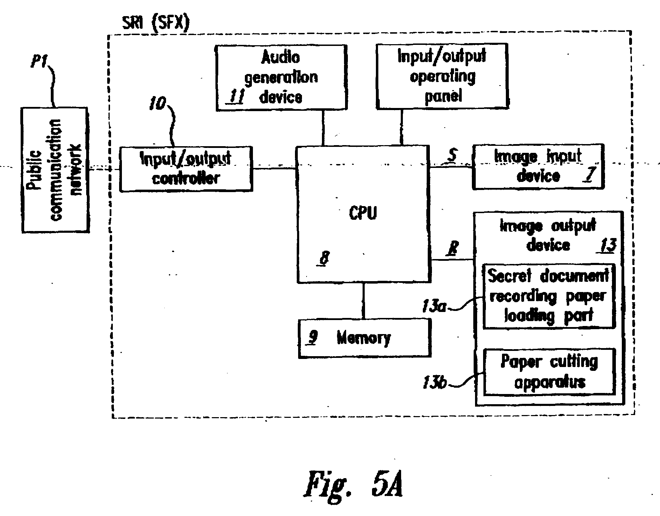

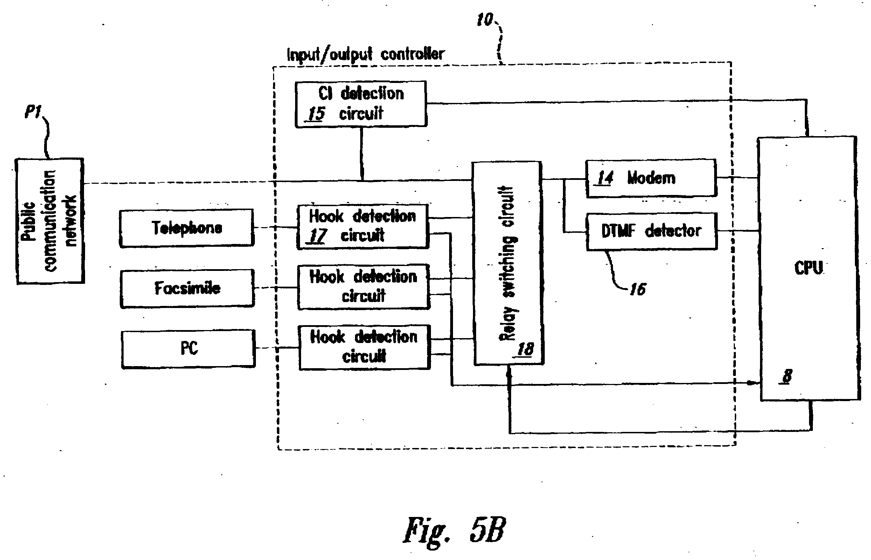

Figure 5 is a block line diagram that shows the constitution of transceiving device (SR) in Application Example 1.

Figure 5(a) shows the internal constitution of the transceiving device, and Figure 5B shows the internal constitution of input/output controller part in the transceiving device.

In Figure 5(a), SFX (Scaled FAX) represents a functional component block of transceiving device (SRp) (pth SFX). (7) is an image input device, (13) an image output device, (8) a CPU, (9) a memory, (10) in input/output controller, (11) an audio generation device, and (12) an input/output operating panel.

Thus, (S) represents the part of transceiving device (SFX) that acts as the transmitting device and (R) represents the part of the same transceiving device (SFX) that acts as the receiving device.

Image input device (7) reads secret document (HD) and address (AT) as transmitted document (SD) with an image scanner, the data are stored in memory (9) of transceiving device (SRp) by control from CPU (8) and transmitted to another receiving device (Rj) via public communication network (P1).

Image output device (13) has secret document recording paper loading part (13a) in which roll-type double paper (R100) is loaded and reproduces/records and outputs received document (ZD) data and duplicated address (AT) data. Editing of received document (ZD), especially the editing of the address, will be discussed below.

Input/output operating panel (12) is furnished with a keyboard; when specific recipient address (AT)) number "03-3123-4567" is input during transmission, "03-3123-4567" is displayed on input/output operating panel (12). Advisory items when no double paper (R100) is loaded, transmission content items when data are transmitted, and instructions for sending and receiving operations are displayed on operating panel (12).

Audio generation device (audio ROM) (11) generates audio signals for terminal operating instructions, generates operation confirmation audio when the transmitter/receiver operates transceiving device (SRp), etc. and improves operating performance and prevents operating errors.

Input/output controller (10) is composed of modem (14), call signal (CI: call information) detection circuit (15), and multi-frequency signal (DTMF: dual tone multi-frequency) detector (16) and controls input/output between transceiving device (SRp) and public communication network (P1). Details of these devices are disclosed in Japanese Kokai Patent Application

No. Hei 8-18689 (Japanese Patent Application No. Hei 6-168565), Japanese Kokai Patent Application No. Hei 9-27914 (Japanese Patent Application No. Hei 7-174967), etc.

Figure 5B shows the internal constitution of input/output controller (10), which will be explained below.

In Figure 5, (14) is a modem, (15) a CI detection circuit, (16) a DTMF detector, (17) a hook detection circuit; and (18) a relay switching circuit.

CPU (8) continually monitors the connection state (on-hook with receive standby and off-hook during reception) of telephones, facsimiles, PCs, and the like that belong to the same terminal by means of hook detection circuit (17) and controls them with relay switching circuit (18). At times of no transmission, relay switching circuit (18) is controlled so that all the terminal equipment will be in receive-standby mode.

When transceiving device (SRp) (pth SFX) operates as transmitting device (Si), other terminal equipment is disconnected while dialing, transmitting device (Si) is connected to public communication network (P1), and data are transmitted via modem (14).

When a call signal (CI) arrives from public communication network (P1), CI detection circuit (15) detects it and notifies the CPU. Call signal (CI) is distributed to all the terminal equipment, causing a call tone to be produced at each, and this fills the role of calling the recipient.

If terminal equipment other than facsimile receiving device (Rj) becomes the receiver first (it wilt be on-hook), hook detection circuit (17) operates and CPU (8) stops the count by CI detection circuit (15). If this is not the case, facsimile receiving device (Rj) will be off-hook, and CPU (8) will stop the count by CI detection circuit (15) in the same way.

When secrecy is increased, when a call signal (CI) is sent to receiving device (Rj), transceiving device (SRp) confirms this call signal (CI) via public communication network (P1) and next generates a unique DTMF signal. CPU (8) confirms this unique signal with DTMF detector (16) and relay switching circuit (18) is switched to the terminal equipment. Each terminal equipment detects the DTMF signal and responds when it is the unique item.

If the terminal equipment does not responds and the count number of CI detection circuit (15) reaches a prescribed value, relay switching circuit (18) is again connected to DTMF detector (16) and the DTMF signal is re-confirmed. When the DTMF signal is not unique to any one of the terminal equipment, the relay circuit is returned to the normal state.

Due to the function of input/output controller (10) above, receiving device (Rj) will have an automatic selection and reception function.

Address data editing

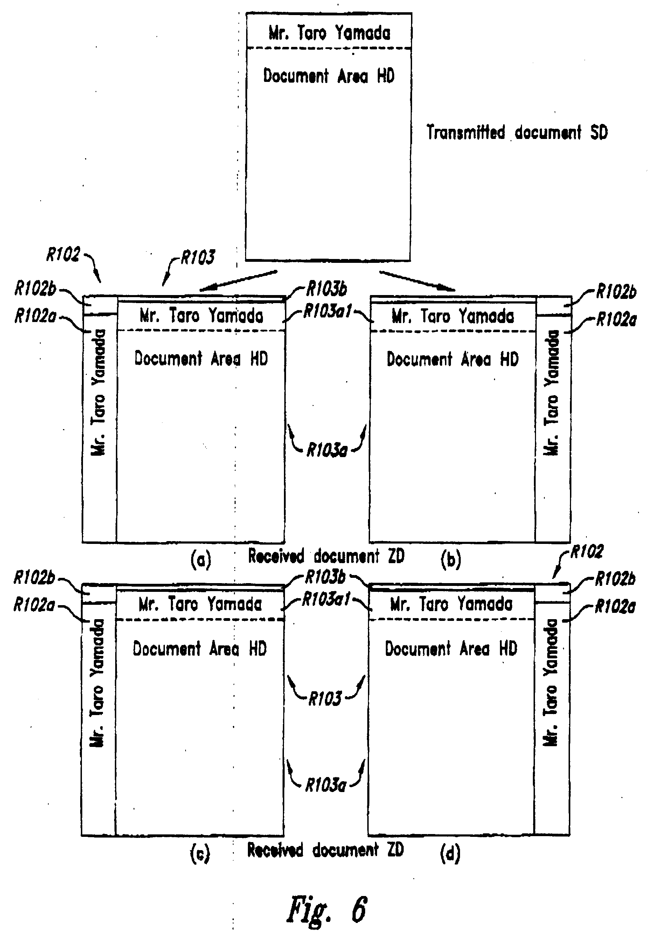

Figure 6 shows the relationship between initial transmitted document (SD) and final received document (ZD). Figures 6(a)-6(d) show different output examples of the final received document.

Figures 6(a)-6(d) show different examples where address (AT) is reproduced/recorded on the left side or right side of roll-type double paper for facsimile reception (R100).

Here, the case shown in Figure 6(b) will be explained first.

Address data editing in the case of Figure 6(b)

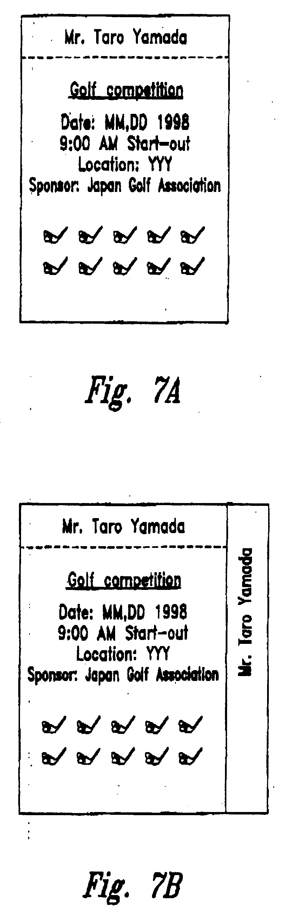

Figure 7 explains the first page of the transmitted document and how the received document is recorded. Figure 7A shows an example of the first page of transmitted document (SD), and Figure 7B shows the document (document in the form to be recorded) developed in the frame memory by editing the first page received document (ZD).

In order to reproduce/record address (AT) on the right side of double paper for facsimile reception (R100), the address (AT) data part in the received document (ZD) data received from transmitting device (Si) must be edited and corrected by receiving device (Rj).

Frame memory (F101), composed of non-visible area frame memory (F103) and visible area (address editing area) memory (F102) is readied as the duplicating/storage means for editing data in this address (AT).

This non-visible document storage area (F103a) is composed of storage capacity for one page (one page of A4, for example) of image data of transmitted document (SD). Visible area frame memory (F102) (address editing area memory) is a memory for storing data where the address (AT) data are changed from vertical to horizontal.

Editing first-page address data

First, address editing of the first page (sheet) of the facsimile reception will be explained below.

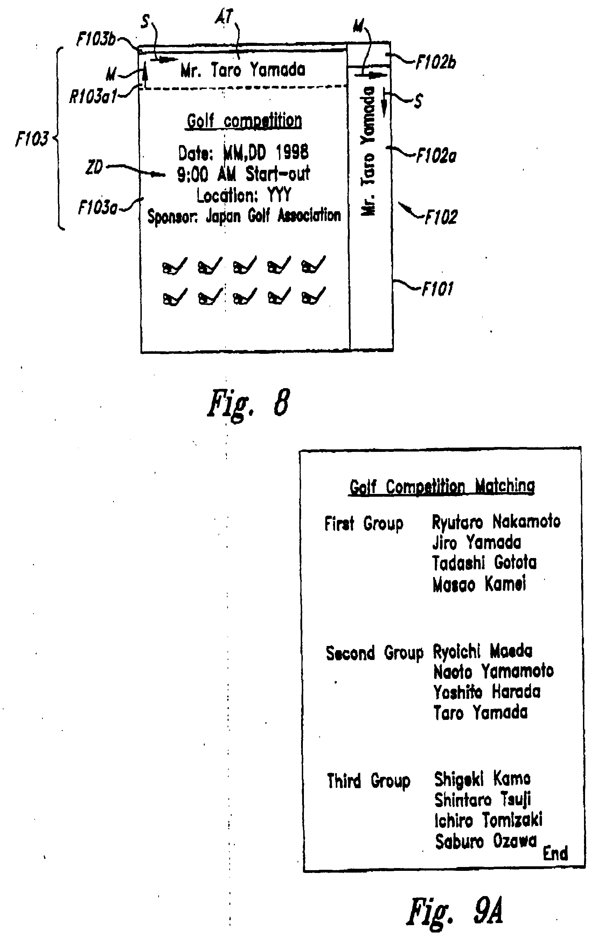

Figure 8 explains frame memory (F101) in Application Example 1.

Receiving device (Rj), as shown in Figure 8, is equipped with frame memory (F101) that includes non-visible area frame memory (F103), in which transmission source information data and image data for one page of transmitted document (SD) are stored, and visible area frame memory (F102). Aforementioned non-visible area frame memory (F103) includes non-visible document storage area (F103a) and transmission source information storage memory (F103b). Aforementioned non-visible document storage area (F103a) includes non-visible document address part storage area (F103a1) that is used to store address (AT) data on the first page of received document (ZD).

After receiving device (Rj) expands the image data for the first page of data of received document (ZD) and image data for the transmission source data stored in memory (9) (refer to Figure 5A) in T4 format they are transmitted to non-visible area frame memory (F103).

With editing of address (AT) data in order to reproduce/record aforementioned address (AT) on the right side of double paper for receiving (R100), image data in non-visible document address pert storage area (F103a1) are treated as one block, rotated 90° clockwise, and duplicated in visible address storage area (F102a) of visible area frame memory (F102). This duplication is performed in following sequence (a1)-(a3), for example.

(a1) First, image data in each memory element for the first column is read from the bottom up, and left to right of non-visible document address part storage area (F103a1) as indicated by the arrow in Figure 8. At the same time, the data are counted from the top of visible address storage area (F102a) as indicated by the arrow in Figure 8 and are duplicated/written from left to right in each memory element in the first line.

(a2) Next, image data in each memory element in the second line of non-visible document address part storage area (F103a1) are read from the bottom up. At the same time, the data are counted from the top of visible address storage area (F102a) and duplicated/written from left to right in each memory element in the second line.

(a3) Duplication and writing are then repeated in the same way, so that finally image data in each memory element in the rightmost column of non-visible document address part storage area (F103a1) are duplicated from the bottom up and at the same time the data are duplicated/written from left to right in each memory element in the last line of visible address storage area (F102a).

The operation to change address (AT) data from vertical to horizontal is performed as described above, and transmitted document (SD) (refer to Figure 7A) is worked/edited into the image data for final received document (ZD) (refer to Figure 7(b)). Aforementioned final received document (ZD) that has been worked/edited is reproduced/recorded (printed out).

Editing second-page address data

Next, editing of the second-page address in facsimile reception will be explained.

For the second page, received document (ZD) data for the second page are transferred to non-visible storage area (F103a) from memory (9) of receiving device (Rj) and visible area frame memory (address editing area memory) (F102) in which address (AT) data are stored is left unchanged (same as the first page).

In this state, image data for the second page stored in frame memory (F101) are reproduced/recorded (printed out). It will be the same as the second page for the third and subsequent pages.

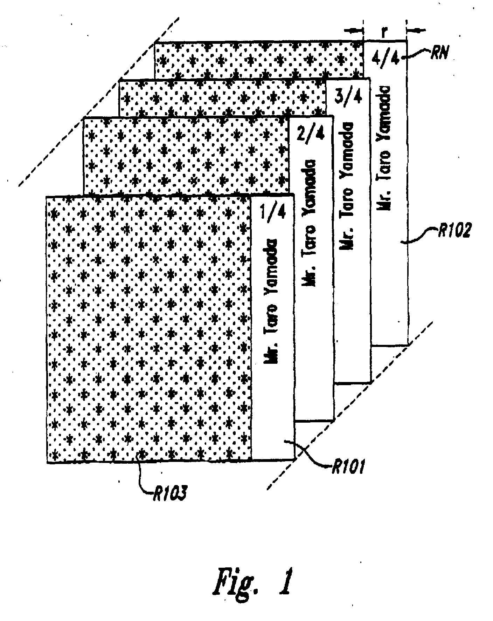

As shown in Figure 1, an address is also added to multiple received documents (ZD) after the second page, so that documents with unclear addresses will be eliminated.

With aforementioned Japanese Kokai Patent Application No. Hei 9-275501 by the present applicant, it was necessary to prepare multiple frame memories (F101) with multiple-page received documents (ZD), but the present method is significantly different in that multiple-page received documents (ZD) can be reproduced/recorded with one frame memory (F101). Received document (ZD) data are stored in compressed T4 format, so that the storage capacity of memory (9) can be economized.

And when a hard copy of received document (ZD) is required, address (AT) will be reproduced/recorded in the address part in the same position as transmitted document (SD), so that it is also different from Japanese Kokai Patent Application No. Hei 9-275501 in that communication with the concerned party will be easy.

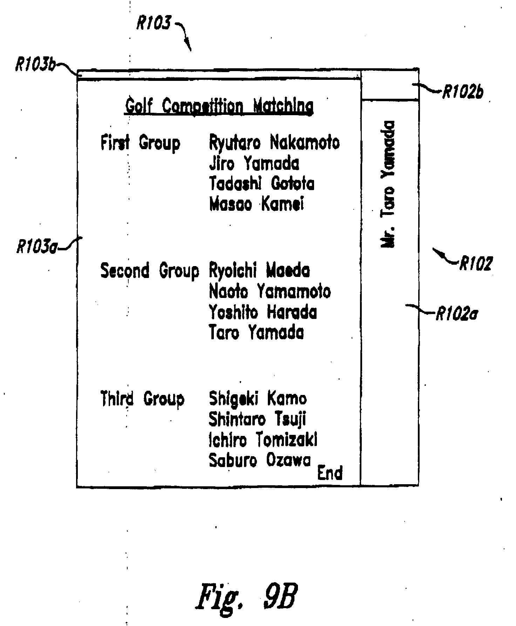

Figure 9 explains the relationship between second-page transmitted document (SD2) and received document (ZD2). Figure 9A shows second-page transmitted document (SD2) and Figure 9B shows the second-page received part.

In the received text, only visible storage area (R102) will be laterally enlarged from the transmitted text (A4, for example).

Address editing in the case of Figure 6A, Figure 6C and Figure 6D

Next, the case of Figure 6A will be performed in the same way.

Address data editing to reproduce/record address (AT) on the left side of double paper for receiving (R100) can be realized by treating the image data in non-visible document address part storage area (F103a1) as one block, rotating it 90° to the left, and moving or copying it to visible address storage area (F102a).

The details are omitted, since this is accomplished in the same way as in the case of Figure 6B.

Additionally, the cases of Figure 6C and Figure 6D will also be realized in the same way as in the cases of aforementioned Figure 6A and 6B, respectively, so that their descriptions are omitted.

Page number data editing

Figure 1 is where data for received document (ZD) (a four-page example) has been converted, then reproduced/recorded by receiving device (Rj) based on the present invention, and then receiving paper (R100) is cut and output.

There are, of course, instances where received document (ZD) will have multiple pages. In such cases, the person who handles the business will not understand the page number sequence and thus there will be problems with filing or distribution.

Thus, page number (RN) is inserted into visible page number recording area (R102b) of visible recording area (R102) (refer to Figure 4B) of each page of received document (ZD) as in Figure 1 so as not to cause this type of problem.

Page number (RN) and the total can also be generated in the form (i/X) (i = 1,2, 3, .... X is the number of pages received). Thus, when the number of pages received is four, for example, page number RN and the total number of pages will be inserted as 1/4, 2/4, 3/4, and 4/4 at the top or bottom of the visible area on each page of the received document, so that it will be that much easier to understand, and business handling will be easy.

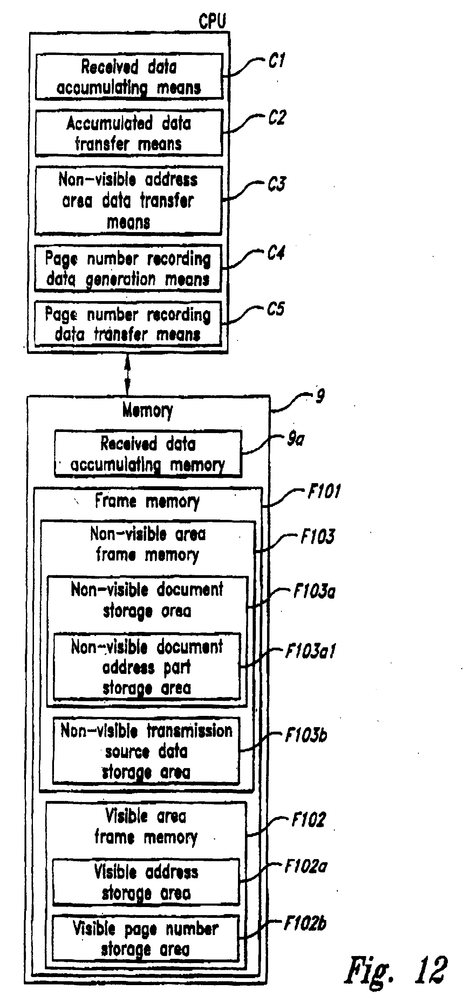

With current communication systems (protocols), transmitting device (Si) will notify receiving device (Rj) of the number of pages in advance, so that it will be stored in received data storage memory (9a) (refer to Figure 12) of memory (9) of receiving device (Rj). Each time one page of data for received document (ZD) is transferred to non-visible document storage area (F103a), data to show a number corresponding to that page number invisible page number recording area (R102b) (refer to Figure 4B) are generated and transferred to visible page number recording area (F102b).

When page number (RN) is only sequential numbers, such as (1, 2, 3,...), the page number can also be generated by receiving device (Rj). However, when the page numbers are (1/X, 2/X, 3/X, ...), total X is found from information for the number of pages sent from the transmitting side or from the number of received pages stored in memory(9).

With the first page, transfer of data from received data accumulating memory (9a) (refer to Figure 12) of memory (9) to visible address storage area (F102a) (via non-visible document address part storage area (F103a1)) will be address (AT) data and page number (RN) data. From the second page on, wish transfer of data to visible address storage area (F102a), address (AT) data are not transmitted, so only page number (RN) data are transmitted, or page number (RN) data are also not transmitted (the number is automatically generated).

With aforementioned Japanese Patent Application No. Hei 8-263422 by the present applicant, with multiple-page received documents (ZD), it would have been necessary to prepare the same number of frame memories (F101) as the number of pages of the received document. With the present method, though, the page numbers for multiple-page received documents (ZD) can be reproduced/recorded with one frame memory (F101).

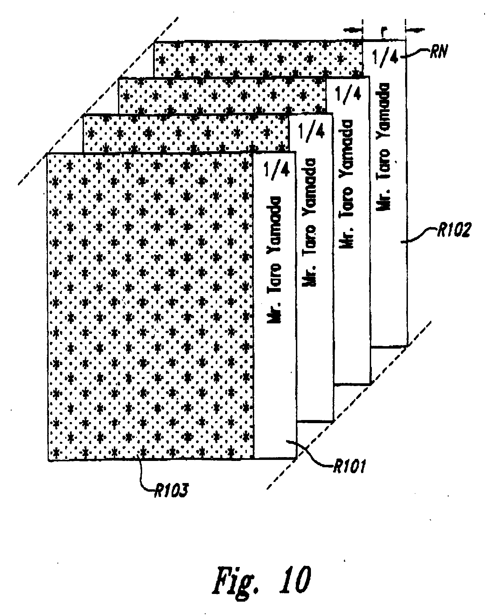

Additionally, with Japanese Patent Application No. Hei 8-263422) by the present applicant when multipie page received documents (ZD) are reproduced/recorded as shown in Figure 10, the same page number (RN) is reproduced/recorded, but these problems can be eliminated with the present invention.

Editing transmission source signal data

Figure 11A shows transmission source information and the data contents of received document (ZD) stored in non-visible area page memory (F103). Figure 11B illustrates an example in which data in non-visible transmission source storage area (F103b) and non-visible document address part storage area (F103a1) are duplicated in visible area memory (F102) and reproduced/recorded on recording paper (R101). Figure 11C illustrates an example in which only the data in non-visible document address part storage area (F103a1) are duplicated in visible address storage area (F102a) and reproduced/recorded.

Generally, facsimile transceiving devices generate transmission source information (R106) (in the example. "FROM A TO B '98 4/29 PM 1:00" as shown in Figure 11A). Thus, when the first page of non-visible document address part storage area (F103a1) and transmission source information storage area memory (F103b) are duplicated in visible address storage area (F102a) and reproduced/recorded, transmission source information (R106) will be displayed in address recording area (R102) as shown in Figure 11B.

In order to complete secret communication, this transmission source information (R106) must be excluded at least from visible address storage area (R102a). An example of that is shown in Figure 11C.

In order to exclude transmission source information (R106), transmission source information (R106) stored in transmission source information storage area memory (F103b) (refer to Figure 8) of non-visible area frame memory (F103) must not be transferred to visible address storage area (F102a).

Normally, these image data are 1-2 cm from the end of received document (ZD), so that the memory that stores the area corresponding to 1-2 cm from the end, from the image data stored in non-visible area frame memory (F103), is aforementioned transmission source information storage area memory (F103b) (refer to Figure 8).

With efforts made so that image data stored in aforementioned transmission source information storage area memory (F103b) are not transferred to visible address storage area (F102a), transmission source information (R106) will be reproduced/recorded excluded from visible address recording area (R102a) as shown in Figure 11C.

The present applicant proposed the same with aforementioned Japanese Kokai Patent Application No. Hei 9-331459, but it has not yet been put into actual use.

This is due to the fact that until now there was no concept for transferring data from non-visible document address part storage area (F103a1) to visible address storage area (F102a), Actual use has become possible for the first time with this application example.

Figure 12 is a block diagram that shows the functions realized by the CPU and the memory configuration of memory (9) (refer to Figure 5A) in aforementioned Application Example 1.

In Figure 12, memory (9) (refer to Figure 5) that is connected to the CPU has received data accumulating memory (9a) and frame memory (F101).

Received data accumulating memory (9a) is a memory that stores compressed received data from other facsimile machines.

In Figure 12 and Figure 8, aforementioned frame memory (F101) has non-visible area frame memory (F103) and visible area frame memory (F102).

Aforementioned non-visible area frame memory (F103) has non-visible document storage area (F103a) and non-visible transmission source data storage area (F103b). Aforementioned non-visible document storage area (F103a) includes non-visible document address part storage area (F103a1).

Aforementioned non-visible document storage area (F103a) stores data stored in secret document recording area (R103a) in aforementioned Figure 4B. And when the first page of a received document is recorded, data recorded in non-visible address recording area in aforementioned Figure 4B are recorded in aforementioned non-visible document address part storage area (F103a1).

Aforementioned visible area frame memory (F102) has visible address storage area (F102a) and visible page number storage area (F102b).

In Figure 12, CPU the (refer to Figure 5) includes a ROM (read-only memory), RAM (random access memory), etc. The functions of following function realizing means (C1)-(C5) are realized by programs stored in the ROM.

(C1): Received data storage means

Received data storage means (C1) has the function of transferring compressed received data from other facsimile machines to aforementioned received data accumulating memory (9a) and storing them.

(C2): Accumulated data transfer means

Accumulated data transfer means (C2) has the function of reading compressed received data stored in aforementioned received data accumulating memory (9a) one page at a time in sequence, expanding them, and transferring them to non-visible area frame memory (F103a) of aforementioned frame memory (F101).

(C3): Non-visible name area data transfer means

Non-visible name area data transfer means (C3) transfers data stored in aforementioned non-visible document address part storage area (F103a1) to visible address storage area (F102a) when the first page of a received document is recorded.

(C4): Page number recording data generation means

Page number recording data generation means (C4) generates page number recording data that are recorded in visible page number recording area (R102b) in aforementioned Figure 4B.

(C5): Page number recording data transfer means

Page number recording data transfer means (C5) transfers page number recording data generated by aforementioned page number recording data generation means (C4) to visible page number storage area (F102b).

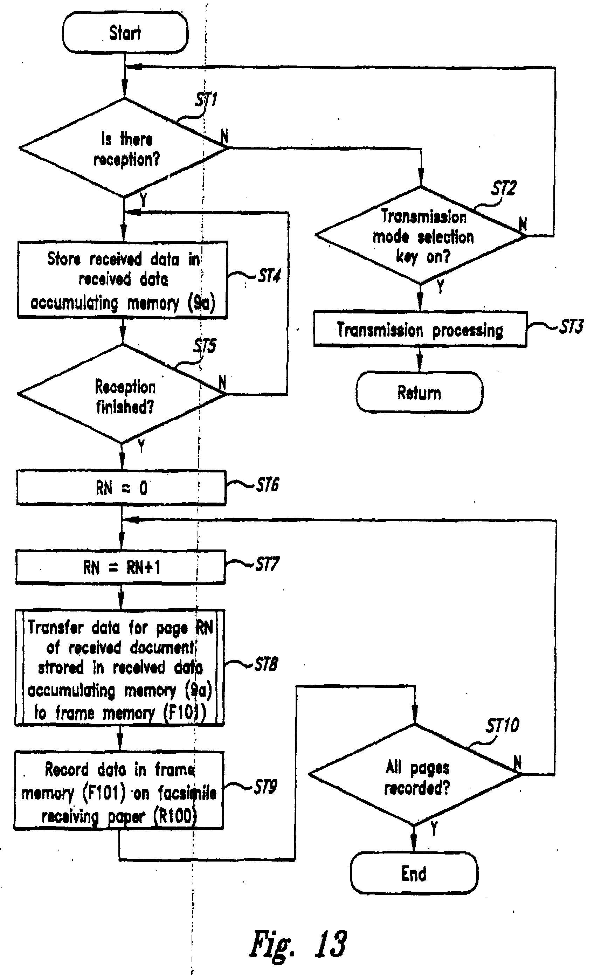

Figure 13 is a flowchart of reception processing by Application Example 1 of the facsimile machine in the present invention.

The flowchart processing in Figure 13 starts when the facsimile machine is turned on.

It is determined whether there is reception at ST1 in Figure 13. If no (N), process control goes to ST2.

It is determined whether a transmission mode selection key has been input at ST2. If no (N), process control returns to aforementioned ST1. At aforementioned ST2, if yes (Y), it goes to ST3.

Transmission processing is performed at ST3. This transmission processing is the same as transmission processing with known, existing facsimile machines.

At aforementioned ST1, if yes (Y), go to ST4.

Received data are stored in received data accumulating memory (9a) (refer to Figure 12) at ST4.

Next, it is determined whether reception is completed at ST5. If no (N), process control returns to aforementioned ST4. If yes, process control goes to ST6.

RN = 0 at ST6. RN is used as the page number of the receive document in the range RN ≥ 1.

Next, RN = RN + 1 at ST7.

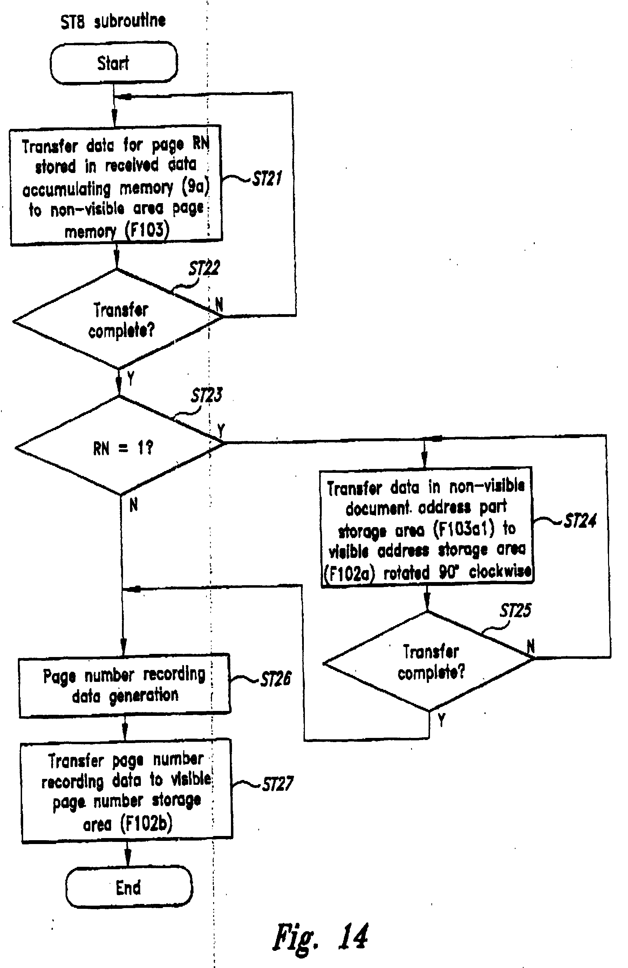

Next, data for page number RN of the received document stored in received data accumulating memory (9a) (refer to Figure 12) is transferred to frame memory (F101) (refer to Figures 8 and 12) at ST8. Note that this subroutine for ST8 is discussed below with Figure 14.

Next, the data in frame memory (F101) are recorded on facsimile receiving paper (R100) (refer to Figure 4) at ST9.

It is then determined whether all the page of the received document have been recorded at ST10. If no (N), process control returns to aforementioned ST7. If yes (Y), process control returns to aforementioned ST1.

Figure 14 is the subroutine for ST8 in Figure 13.

At ST21 in Figure 14, data for page number RN of the received document stored in received data accumulating memory (9a) (refer to Figure 12) is transferred to non-visible area frame memory (F103).

It is then determined whether the transfer is completed at ST22. If no (N), process control returns to aforementioned ST21.

If yes (Y) at ST22, it goes to ST23.

It is determined whether RN = 1 at ST23. If yes (Y), process control goes to ST24.

The data in non-visible document address past storage area (F103a1) (refer to Figure 8) are rotated 90° clockwise and transferred to visible address storage area (F102a) at ST24.

It is then determined whether transfer is completed at ST25. If no (N), process control goes to aforementioned ST24. If yes (Y), process control goes to ST26.

Also, if no (N) at aforementioned ST23, process control goes to ST26.

Page number recording data are generated at ST26.

Next at ST27, the aforementioned page number recording data that have been generated are transferred to visible page number storage area (F102b).

Process control then goes to aforementioned ST9 in Figure 13.

Application Example 2

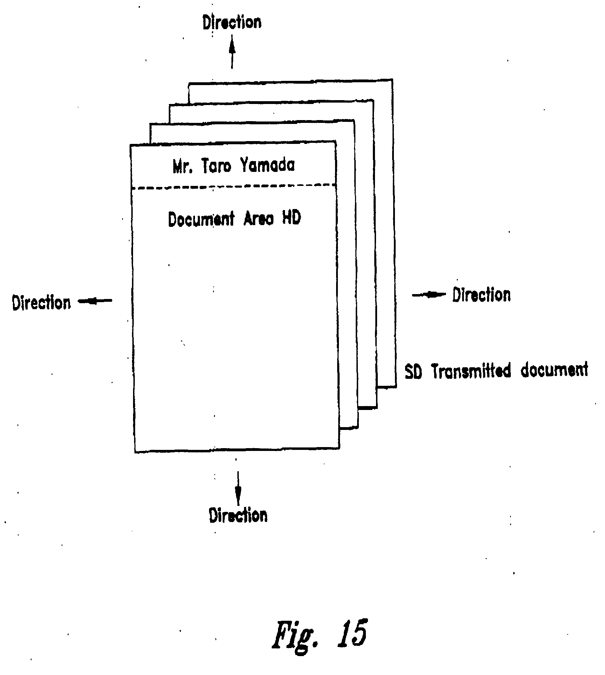

Next, a facsimile machine represented as Application Example 2 will be explained with reference to Figures 15-21.

This Application Example 2 is the same as Application Example 1, except that the address data editing method is different from aforementioned Application Example 1.

Address working

With Application Example 1, it is assumed that transmitted document (SD) is accurately set in transmitted device (Si).

Figure 15 shows four methods when transmitted document (SD) is read by transmitting device (Si). There are four read directions: direction a, direction b, direction c, and direction d. Direction a is the case explained with Application Example 1.

However, with direction c, address (AT) on received document (ZD) will come last on the first page.

Thus, address (AT) data must be identified and duplicated from received document (ZD) data.

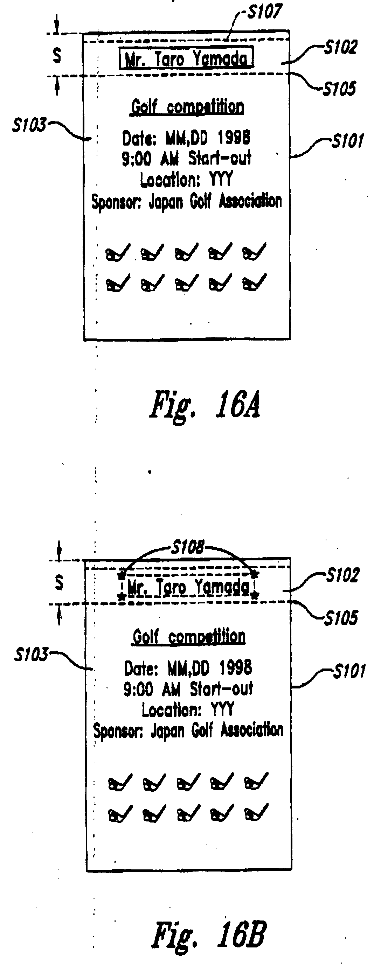

Figure 16 shows an example of detection of the area where address (AT) is recorded. Figure 16A is the case of transmitted document (SD) where address (AT) is enclosed by square graphic (S107), and Figure 16B is a case where it is enclosed by symbol (S108).

Signal processing for the case in which transmitted document (SD) that is transmitted in direction c in Figure 15 is received as received document (ZD) is described below.

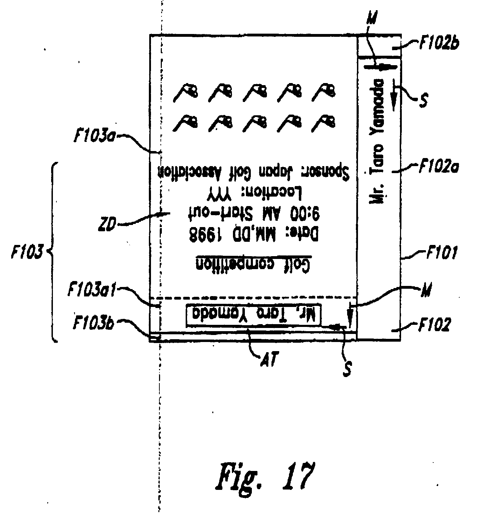

Data for the first page of received document (ZD) are transferred to non-visible area frame memory (F103a) from received data accumulating memory (9a) of memory (9) of receiving device (Rj) and the area of address (AT) is searched. Graphic (S107) or (S108) in non-visible document address part storage area (F103a1) is found and only address (AT) data in it are transferred to visible address storage area (F102a) of visible area frame memory (F102). In this case, non-visible document address storage area (F103a1) will be positioned below non-visible document storage area (F103a), as shown in Figure 17. The method for transferring address (AT) data to visible address storage area (F102a) is the same as with Application Example 1. Figure 17 is the case of (a), from the aforementioned four cases (a)-(d) in Figure 6. Figure 17 shows a case where only address (AT) data are duplicated/transferred to visible address storage area (F102a).

Of course, it is also possible to display not only address (AT) data but also graphic (S107) in the visible area by duplicating/transferring not only address (AT) data but also graphic (S107) data to visible address storage area (F102a).

In addition, the case in which the transmission sequence is reversed (when the first page is transmitted last from transmitting device (Si)) is also possible. Conversion of address (AT) in a case in which address (AT) is not written on the first page of transmitted document (SD) is described below.

The first page of received data is transferred to non-visible document storage area (F103a) from received data accumulating memory (9a) of memory (9) of receiving device (Rj) and address (AT) is searched, When there is no address (AT) (square graphic (S107) in Figure 17 is not found), the fourth page of the received data is transferred to non-visible document storage area (F103a) and address (AT) is searched for.

In many cases, address (AT) should be found by these two operations (searching the first and last pages).

However, if address (AT) his still not been found, the second page and third page can also be transferred to non-visible document storage area (F103a) from memory (9) and address (AT) searched.

After address (AT) has been found, address (AT) data are duplicated/transferred to visible address storage area (F102a) from non-visible document address part storage area (F103a1) and image data for received document (ZD) are reproduced/recorded.

In addition, in the aforementioned (Figure 16), a case in which address (AT) was enclosed by square graphic (S107) or enclosed by graphic (S108) (four stars [****]) was shown. However, more commonly, when the address is searched, there is the danger of misidentification. Thus, when special symbols, e.g., "barcodes" are furnished and the address is specified (recognized) as a position (area) where address (AT) is written in a closed region (area) where lines join these symbols, address recognition accuracy will be increased and the security of secret communication will be higher.

With general facsimile communication, there are cases in which transmission paper with letterhead is used, and with the method of Application Example 1, the letterhead will be displayed (reproduced/recorded) in visible address recording area (R102a). However, in this case too, address (AT) on received document (ZD) can be searched for by enclosing address (AT) on transmitted document (SD) with special symbol (S108) and only address (AT), excluding the letterhead, can be reproduced/recorded invisible address recording area (R102a).

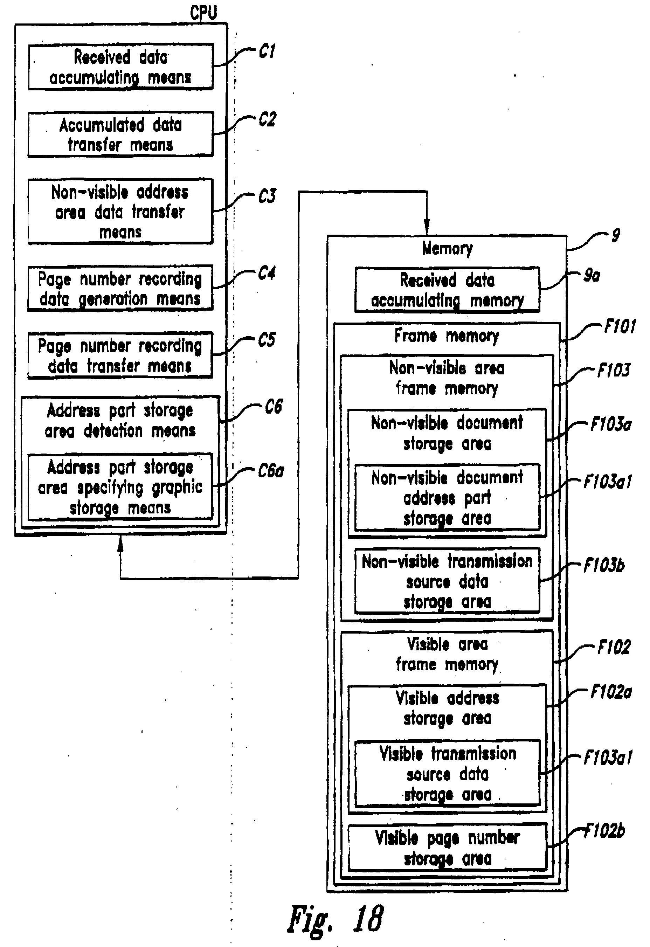

Figure 18 is a block diagram that shows the functions realized by the CPU and the memory constitution of memory (9) (refer to figure 5) the same as aforementioned Application Example 1.

In Figure 18, visible address recording area (R102a) of visible area frame memory (F102) includes visible transmission source data storage area (F102a1) to which aforementioned non-visible transmission source data storage area (F102a1) [sic] is transferred.

In Figure 18, the CPU realizes the functions of function realization means (C1)-(C5) explained with aforementioned Application Example 1 and the function of following address part storage area detection means (C6) with programs stored in the ROM.

(C6): Address part storage area detection means

Address part storage area detection means (C6) functions to detect non-visible document address part storage area (F103a1) from the data in non-visible area frame memory (F103).

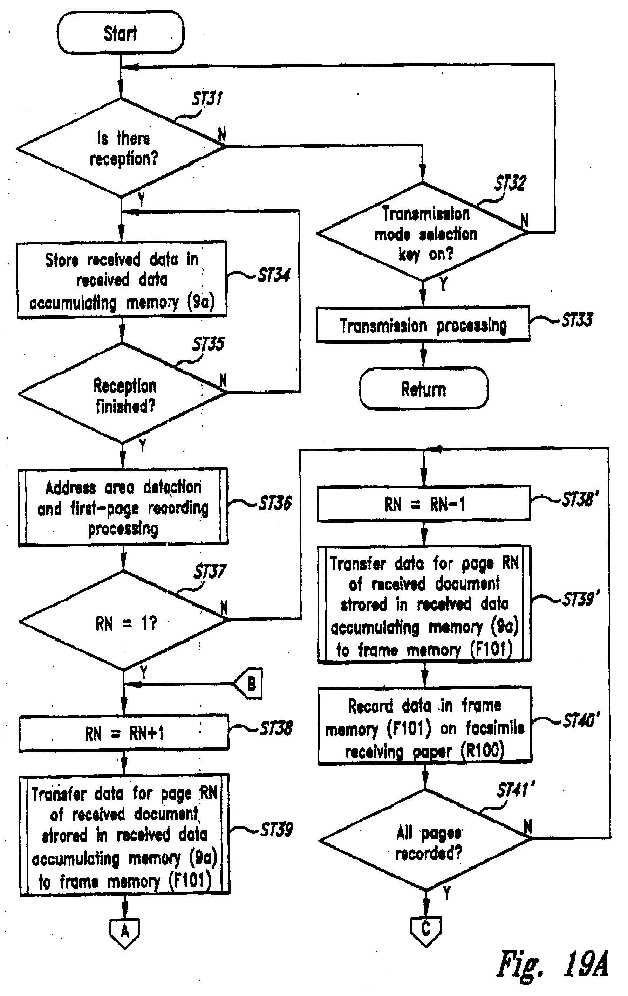

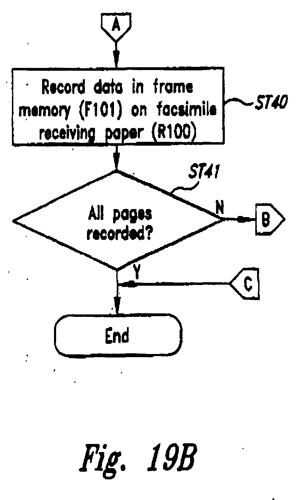

Figure 19 is a flowchart of reception processing by Application Example 2 of the facsimile machine of the present invention.

Processing in the flowchart in Figure 19 starts when the facsimile machine is turned on.

AT ST31 in Figure 19, it is determined whether there is reception. If no (N), process control goes to ST32.

It is determined whether a reception mode selection key has been input at ST32. If no (N), process control returns to aforementioned ST31. If yes (Y) at aforementioned ST32, go to ST33.

Reception processing is performed at ST33. This reception processing is the same as reception processing by existing known facsimile machines.

If yes (Y) at aforementioned ST31, process control goes to ST34.

Store received data in received data accumulating memory (9a) (refer to Figure 12) at ST34.

It is then determined whether reception is finished at ST35. If no (N), process control returns to aforementioned ST34. If yes (Y), process control goes to ST36.

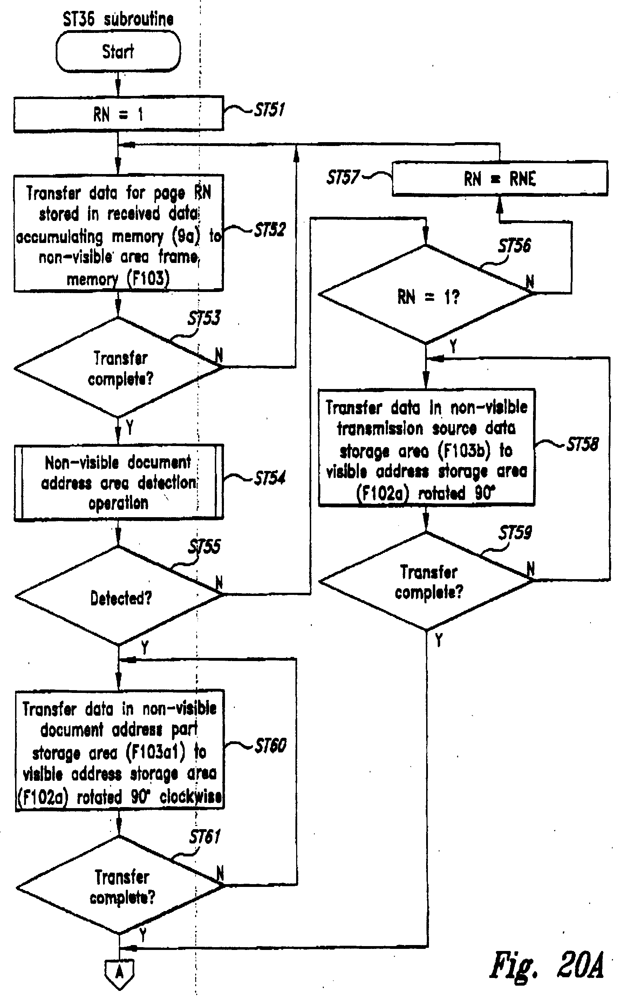

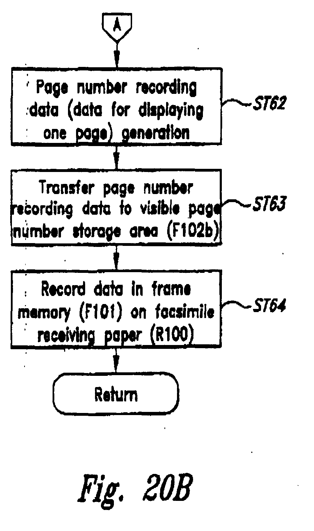

The subroutine for this ST36 that executes address area detection and first page recording processing at ST36 is discussed below with Figure 20.

After first page recording (image output) is finished by aforementioned ST36, process control goes to ST37.

At ST37, it is determined whether RN = 1. If yes (Y), process control goes to ST38.

RN = RN+1 at ST38.

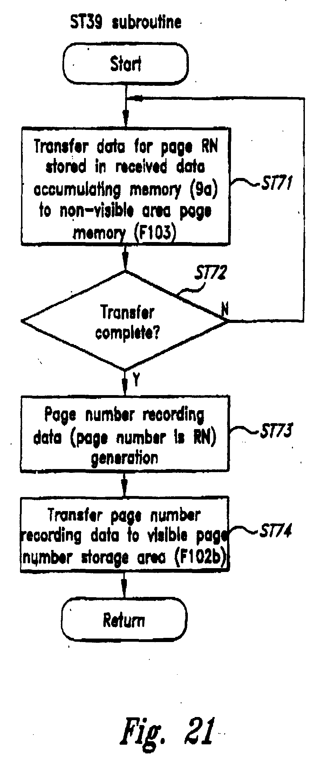

Next the data on page RN for the received document stored in received data accumulating memory (9a) (refer to Figure 18) is transferred to frame memory (F101) (refer to Figures 8 and 18) at ST39. Note that the subroutine for this ST39 is discussed below with reference to Figure 21.

Next, the data in frame memory (F101) is recorded on facsimile receiving paper (R100) (refer to Figure 4) at ST40.

It is determined whether all the pages of the received document have been recorded at ST41. If no (N), process control returns to aforementioned ST38. If yes (Y), it returns to aforementioned ST31.

The aforementioned ST38-S41 are performed when aforementioned graphic (S107) or (S108) is detected on the first page of received data, so that sequential page numbers will be added after the first page of received data.

If no (N) at aforementioned ST37, processing of ST38'-ST41' is executed. ST38'-ST41' are discussed below, and they are reformed when aforementioned graphic (S107) or (S108) is detected on the last page of the received data. Thus, sequential page numbers are added from the last page of received data.

Subroutine for ST36 in aforementioned Figure 19

Figure 20 is the subroutine for ST36 in aforementioned Figure 19.

RN = 1 at ST51 in Figure 20.

Next, data on page RN of the received document stored in received data accumulating memory (9a) (refer to Figure 12) is transferred to non-visible area frame memory (F103) at ST52.

It is then determined whether transfer is completed at ST53. If no (N), process control returns to aforementioned ST52. If yes (Y) at ST53, it goes to ST54.

At ST54, the operation to detect the non-visible document address area, that is, graphic (S107), is performed (refer to Figure 16A) or (ST108) [sic; (S108)] (refer to Figure 16B).

It is then determined whether it has been detected at ST55. If no (N), process control goes to ST56.

It is determined whether RN = 1 at ST56. If yes (Y), aforementioned graphic (S107) will not be present on the first page. In that case, process control goes to ST57.

RN = RNE at ST57. RNE means the last page of the received document.

Process control then returns to aforementioned ST52. With aforementioned ST52-ST54, it is detected whether or not graphic (S107) or (S108) is present on the last page of the received document. Process control then goes to aforementioned ST55.

At ST55 the second time, if no (N), neither graphic (S107) or (ST108) [sic; (S108)] will have been detected on either the first page or the last page of the received document, In this case, process control goes to ST58.

At ST58, transfer the data in non-visible transmission source data storage area (F103b) to visible address recording area (R102a). In this case, only transmission source data (R106) (refer to Figure 11) will be recorded invisible address recording area (R102a).

It is then determined whether transfer is completed at ST59. If no (N), process control returns to aforementioned ST58, If yes (Y) at ST59, it goes to ST62.

If yes (Y) at ST55 (when graphic (S107) or (S108) shown in Figure 16 has been detected), process control goes to ST60.

At ST60, the data in non-visible document address part storage area (F103a1) (refer to Figure 8) is rotated 90° clockwise and transfer to visible address storage area (F102a).

It is then determined whether transfer is completed at ST61. If no (N), process control returns to aforementioned ST60. If yes (Y), process control goes to ST62.

Page number recording data (data to display one page) is generated at ST62.

Next at ST63, the aforementioned page number recording data that have been generated is transferred to visible page number storage area (F102b).

The data in frame memory (F101) is then recorded on facsimile receiving paper (R100) (refer to Figure 4) at ST64.

Process control then goes to aforementioned ST37 in aforementioned Figure 19.

Subroutine for ST39 in aforementioned Figure 19

Figure 21 is a subroutine for ST39 in aforementioned Figure 19.

Data for page RN of the received document stored in received data accumulating memory (9a) (refer to Figure 12) are transferred to non-visible area frame memory (F103) at ST71 in Figure 21.

It is then determined whether transfer is completed at ST72. If no (N), process control returns to aforementioned ST71.

If yes (Y) at ST72, process control goes to ST73.

Page number recording data (page number is RN) is generated at ST73.

Next at ST74, the aforementioned page number recording data that have been generated are transferred to visible page number storage area (F102b).

Process control then goes to ST40 in aforementioned Figure 19.

Subroutine for ST39' in aforementioned Figure 19

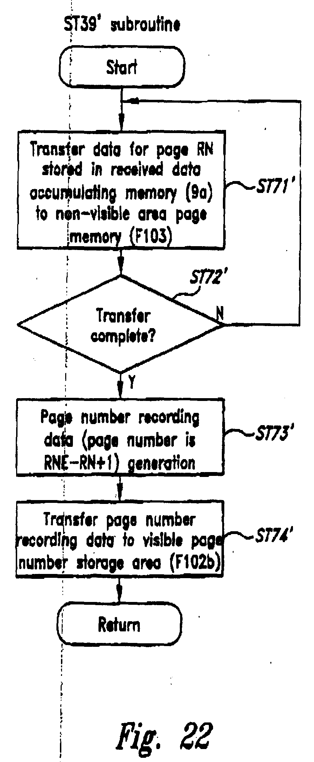

Figure 22 is a subroutine for ST39' in aforementioned Figure 19.

The processing steps ST71'-ST74' in figure 22 and the processing steps ST71-ST74 in aforementioned Figure 21 are the same, except for steps in ST73' and ST73.

Page number recording data (page number is RNE-RN +1) are generated at ST73'.

ST Figure 22 [sic] adds page 1 to recording paper (R101) on which the image of the last page (RNE) is recorded, adds page 2 to recording paper (R101) on which an image of the page before the last page (RNE), that is page (RNE-1), is recorded, ..., and adds last page number RNE to recording paper (R101) on which an image of page 1 is recorded, since graphic (S107) or (S108) shown in aforementioned Figure 16 has been detected on the last page of the received document data.

The remaining items are the same as the first application example.

Application Example 3

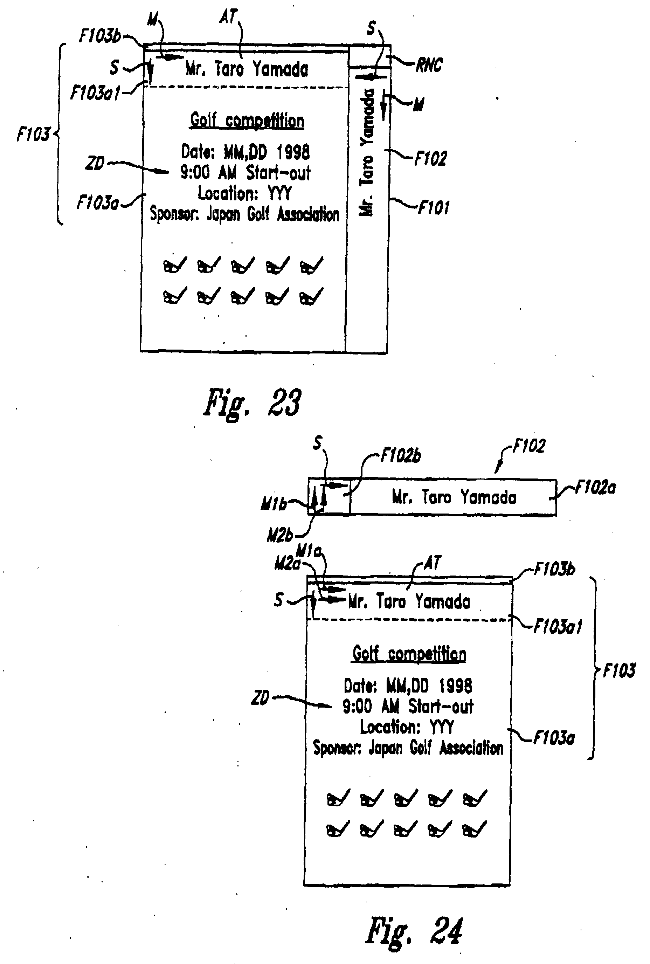

Figure 23 explains a facsimile machine in Application Example 3.

This Application Example 3 is the same as Application Example 1, except that the address data editing method is different from aforementioned Application Example 1.

In order to reproduce/record address (AT) on the right side of double paper for receiving (R100), for editing address (AT), image data in non-visible document address part storage area (F103a1) are treated as one block, rotated 90° clockwise, and duplicated in visible area frame memory (address editing area memory) (F102), This duplication is performed in the following sequence (a1)-(a3), for example.

(a1) In Figure 23, as indicated by the arrow, image data in each memory element in the first line from the top of non-visible document address part storage area (F103a1) are read from left to right (direction of arrow (M)). At the same time, the data are duplicated/written from top to bottom (direction of arrow (M)) in each memory element in the first column counting from the right of visible address storage area (F102a).

(a2) Next, the image data in each memory element in the second line of non-visible document address part storage are (F103a1) are read from left to right (direction of arrow (M)). At the same time, the data are duplicated/written from top to bottom (direction of arrow (M)) in each memory element in the second column counting from the right of visible address storage area (F102a).

(a3) Duplication and writing are repeated in the same way thereafter. Finally the image data in each memory element in the last row of non-visible document address part storage area (F103a1) are read from left to right, and at the same time, the data are duplicated/written from top to bottom in each memory element in the column at the left end of visible address storage area (F102a).

Note that, in this Application Example 3, writing to non-visible document address part storage area (F103a1) and address editing area memory (visible area frame memory) (F102) is also possible.

Application Example 4

Figure 24 explains a facsimile machine in Application Example 4.

This Application Example 4 is the same as Application Example 1, except that the address data editing method is different from aforementioned Application Example 1.

In this Application Example 4, visible address storage area (F112a) of visible area frame memory (F102) has the same storage capacity as shielded name storage area memory (F103a) of non-visible area frame memory (F103) and address (AT) data are stored unchanged without editing. That is, address (AT) data are written simultaneously to shielded address storage area memory (F103a) of non-visible area frame memory (F103) and visible address storage area (F112a) of visible area frame memory (F102).

In Figure 24, with storage of address (AT) data to aforementioned visible address storage area (F112a) and storage of received document (ZD) to non-visible area frame memory (F103) completed, when received document (ZD) is reproduced/recorded, it is accomplished in the following sequence (a1)-(a3), for example.

(a1) In Figure 24, as indicated by arrow (M1a), image data in each memory element in the first line from the top of non-visible document address part storage area (F103a1) are read from left to right (direction of arrow (M1a)). After reading to the right end, then image data in each memory element in the first column counting from the right of visible area frame memory (F102) are read from the bottom up (direction of arrow (M1b).

(a2) Next, image data for each memory element in the second row of non-visible document address part storage area (F103a1) are read from left to right (direction of arrow (M2a)), After rending to the right end, the image data in each memory element in the second column counting from the right of visible area frame memory (F102) are read from the bottom up (direction of arrow (M2b)).

(a3) In the same way thereafter, while image data are continually read from non-visible document address part storage area (F103a1) and visible area frame memory (F102), they are reproduced/recorded on the facsimile receiving paper.

Application Example 5

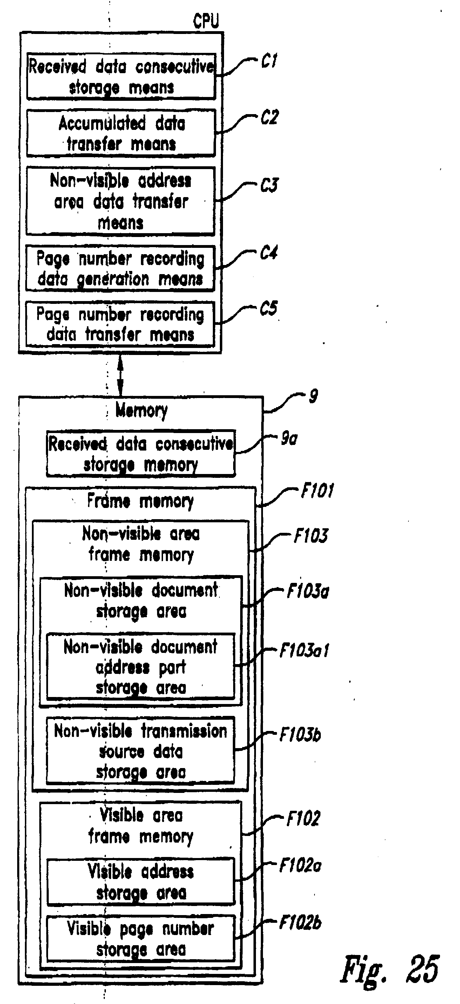

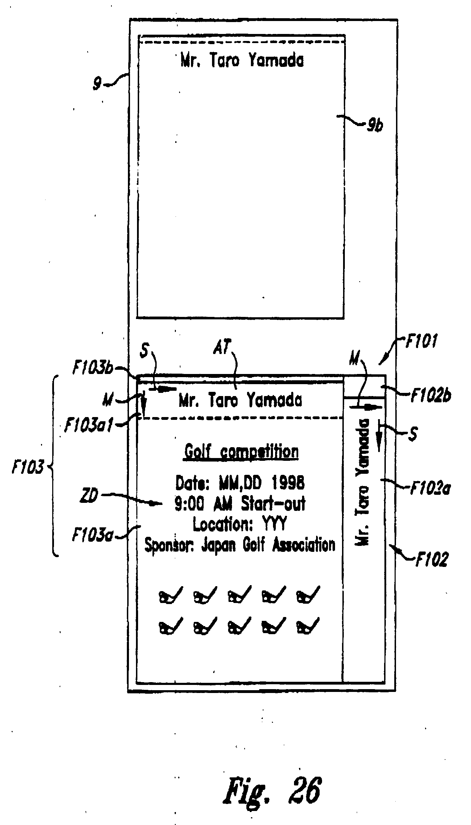

Figures 25 and 26 explain a facsimile machine in Application Example 5.

This Application Example 5 is the same as Application Example 1, except that the address data editing method is different from aforementioned Application Example 1.

Figure 25 is a block diagram that shows functions (C1)-(C5) realized by the CPU and the memory constitution of memory (9) (refer to Figure 5A) is the same as in aforementioned Application Example 1. Figure 26 is an explanatory block diagram of memory (9) in aforementioned Figure 25.

In Figures 25 and 26, memory (9) in Application Example 5 contains received data consecutive storage memory (9b) instead of received data accumulating memory (9a) (refer to Figure 12) in aforementioned Application Example 1. Received data accumulating memory (9a) of aforementioned Application Example 1 is a large capacity memory, while received data consecutive storage memory (9b) in Application Example 5 is of small capacity: it can store one page of data (compressed received data) for receiving paper (R101). This is to conserve the capacity of memory (9).

In Figure 26, when one page of received data (compressed data) are accumulated in received data consecutive storage memory (9b), reception is stopped, data stored in received data consecutive storage memory (9b) (one page of stored data) are expended, and they are transferred to non-visible area frame memory (F103) of frame memory (F101). Next, the data in non-visible document address part storage area (F103a1) are transferred to visible address storage area (F102a).

Next, page number recording data are generated in the same way as in aforementioned Application Example 1 and they are transferred to visible page number storage area (F102b). Next, data in aforementioned frame memory (F101) are recorded and output.

Next, received data for the second and later pages are successively received for each page in the same way as the aforementioned first page and are recorded on the recording paper.

Application Example 6

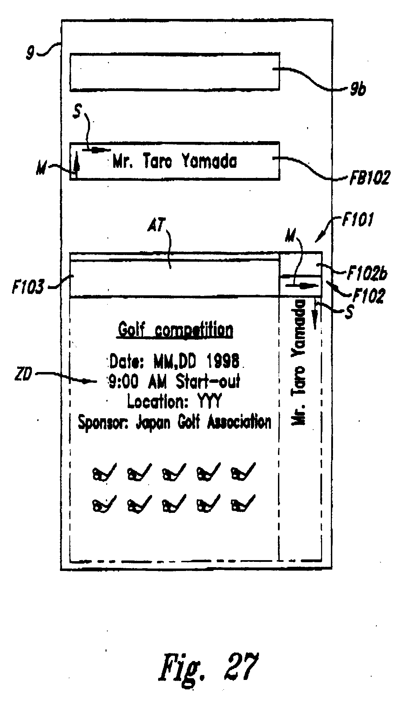

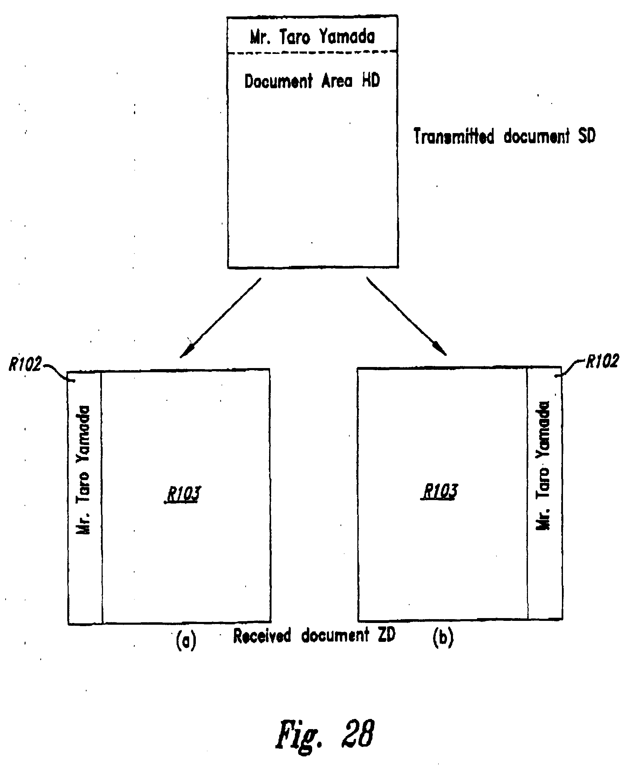

Figure 27 explains a facsimile machine in Application Example 6. Figure 28 shows the first page of the transmitted example and the first page of the received document that have been recorded in Application Example 6.

Application Example 6 of this facsimile machine of the present invention is a facsimile machine that will perform processing necessary for the non-visible area and visible area with a small-capacity memory to edit address data successively.

This Application Example 6 is the same as Application Example 1 except that the address data editing method is different than that of aforementioned Application Example 1.

In Figure 27, memory (9) has received data consecutive storage memory (9b) that receives and stores a prescribed number of lines of transmitted data and visible area buffer memory (FB102). Note that, in this Application Example 6, visible area buffer memory (FB102) has a storage capacity that can store image data in transmission source information storage area (R103b) and non-visible address recording area (R103a1) shown in Figure 4B.

First, address editing for the first page (sheet) of facsimile reception will be explained.

Transmission source information data and address (AT) data corresponding to a prescribed number of lines at the beginning of image data for the first page received by receiving device (Ri) are stored in received data consecutive storage memory (9b). When received data consecutive storage memory (9b) is full, data reception is temporarily. Transmitting device (Si) also stops transmission temporarily.

The data stored in aforementioned received data consecutive storage memory (9b) are compressed in the original form in which it was received.

When the data stored in received data consecutive storage memory (9b) are the initial data on the page (address data (AR)), they are expanded and transferred to visible area buffer memory (FB102). The next page number recording data are generated in the same way as aforementioned Application Example 1 and transferred to visible page number storage area (F102b). Next, data for a prescribed number of lines stored in received data consecutive storage memory (9b) are transferred to non-visible area page memory (F103).

Note that when the data stored in received data consecutive storage memory (9b) are not the initial data on the page but the second or subsequent data, the transfer to aforementioned visible area buffer memory (FB102) and generation and transfer of page number recording data are not performed. The data for a prescribed number of lines stored in received data consecutive storage memory (9b) are transferred to non-visible area page memory (F103).

Next data in aforementioned visible area buffer memory (FB102) are rotated 90° and transferred to visible area line memory (F102). As can be seen from Figure 27, the capacity of visible area line memory (F102) is smaller than the capacity of visible area buffer memory (FB102), so that when a portion of the data in visible area buffer memory (FB102) has been transferred, visible area line memory (F102) will be full. The remaining untransferred data that have not been transferred are transferred to visible area line memory (F102) when the next received data for the prescribed number of lines is transferred to non-visible area line memory (F103) from received data consecutive storage memory (9b).

In Figure 27, data transfer from aforementioned visible area buffer memory (FB102) to visible area line memory (F102) is performed in following sequence (a1)-(a3).

(a1) In figure 27, as indicated by arrow (M), image data in each memory element in the first column from the left of visible area buffer memory (FB102) are read from the bottom up (direction of arrow (M)). When the data that have been read are written from left to right of the first line of the top end of visible area line memory (F102) (when page display data are transferred to visible page number storage area (F102b), the top end of the area beneath that area).

(a2) Next, image data in each memory element in the second column of visible area buffer memory (FB102) are read from the bottom up (direction of arrow (M)). The data that have been read are written from left to right of the second line from the top end of visible area line memory (F102).

(a3) In the same way thereafter, image data are read continuously from visible area buffer memory (FB102) and are transferred to visible area line memory (F102). After visible area line memory (F102) is full, reading and transfer of visible area buffer memory (FB102) is stopped. For transfer the next time, transfer is started from the data in the memory element at the next position from the position where aforementioned reading of visible area buffer memory (FB102) was stopped. Note that for each page, after all the data in visible area buffer memory (FB102) have been transferred, no data are transferred to visible area line memory (F102) by visible area buffer memory (FB102) until transfer of the following page of data starts.

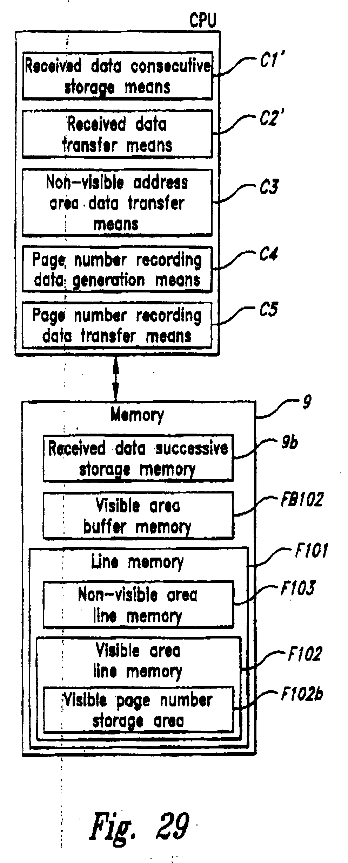

Figure 29 is a block diagram that shows the functions realized by the CPU and the memory configuration of memory (9) (refer to Figure 5A) in aforementioned Application Example 6.

As shown in Figure 29, memory (9) connected to the CPU (see Figure 5) has a received data consecutive storage memory (9b) and a frame memory (F101).

Received data accumulating memory (9a) is a memory that accumulates compressed received data from other facsimile machines.

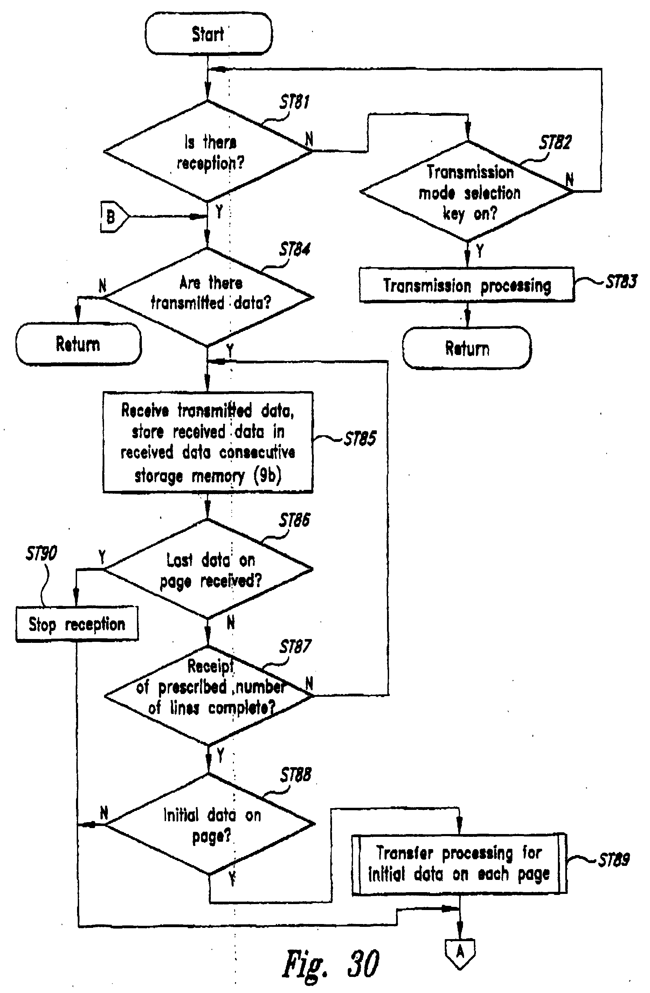

Figure 30 is a flowchart of reception processing by Application Example 6 of the facsimile machine of the present invention.

The processing in the flowchart in Figure 30 starts when the facsimile machine is turned on.

At ST81 in Figure 30, it is determined whether there is reception. If no (N), process control goes to ST82.

It is determined whether a transmission mode selection key has been input at ST82. If no (N), process control returns to aforementioned ST81. If yes (Y) at aforementioned ST82, go to ST83.

Reception processing is performed at ST83. This reception processing is the same as reception processing by existing known facsimile machines.

If yes (Y) at aforementioned ST81, process control goes to ST84.

It is determined whether there are received data at ST84. If no (N), process control returns to ST81. If yes (Y) at ST84, it goes to ST85.

At ST85, transmitted data are received and the received data are transferred to received data consecutive storage memory (9b) (refer to Figure 29).

Next, it is determined whether the data for the last page have been received at ST86. If no (N), process control goes to ST87.

Next, at ST87, it is determined whether reception of the prescribed number of lines has been completed. If no (N), process control returns to aforementioned ST85. If yes (Y), process control goes to ST88.

At ST88, it is determined whether the data stored in aforementioned received data consecutive storage memory (9b) are the initial data on each page. If yes (Y), process control goes to ST89, and if no (N), it goes,to ST91.

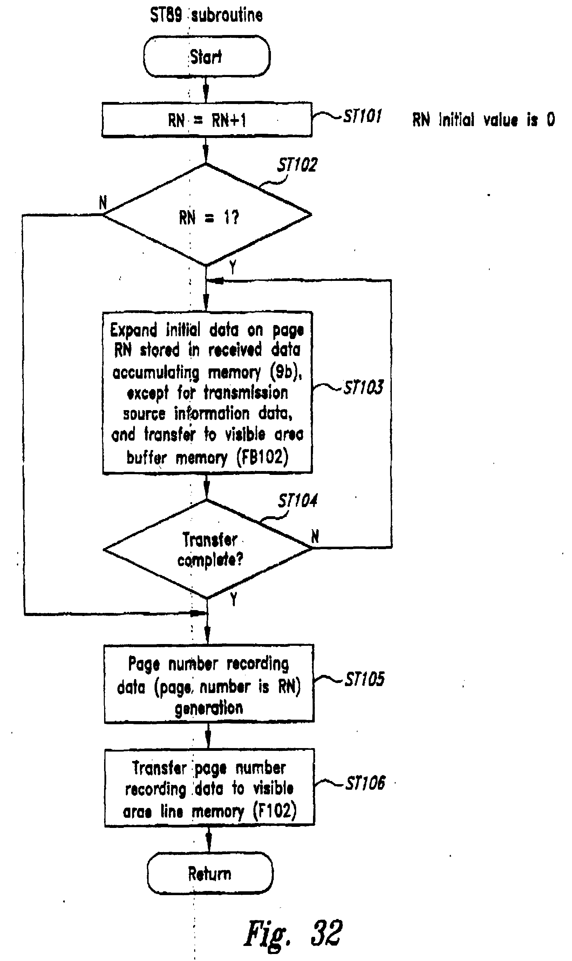

Transfer of the initial data on each page is executed at ST89. The subroutine for ST89 is discussed below with reference Figure 32. Process control then goes to ST91.

If yes (Y) at aforementioned, ST86 (when the last data on the page have been received), process control goes to ST90.

Reception is stopped at ST90 and process control goes to ST91.

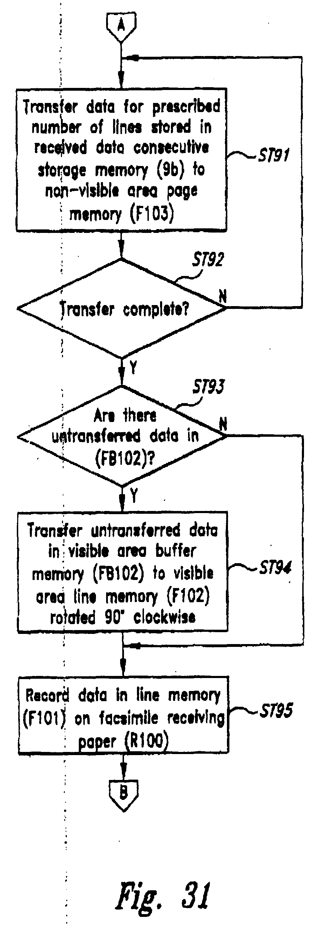

Figure 31 is a flowchart that is a continuation of Figure 30.

At ST91 in Figure 31, data for page RN of the received document stored in received data successive storage cumulative memory (9b) (refer to Figure 29) are transferred to non-visible area line memory (F103) (refer to Figure 29).

It is determined whether transfer is completed at ST92. If no (N), process control returns to aforementioned ST91. If yes (Y), process control goes to ST93.

It is determined whether untransferred data remain in visible area buffer memory (FB102) at ST93. If yes (Y), process control goes to ST94, and if no (N), it goes to ST95.

At ST94, the untransferred data in visible area buffer memory (FB102) are rotated 90° and transferred to visible area line memory (F102).

Next at ST95, the data in line memory (F101) are recorded on facsimile receiving paper (R100).

Process control then returns to aforementioned ST84.

Figure 32 is the subroutine for ST89 in aforementioned Figure 30.

RN = RN + 1 at ST101 in Figure 32. The initial value of RN is 0.

It is determined whether RN = 1 at ST102. If yes (Y), process control goes to ST103, and if no (N) it goes to ST105.

At ST103, the initial data on the first page of the received document stored in received data consecutive storage memory (9b) (refer to Figure 29), excluding transmission source information data, are expanded and transferred to visible area buffer memory (FB102) (refer to Figure 29).

Next, it is determined whether transfer is complete at ST104. If no (N), process control returns to aforementioned ST103. If yes (Y) at ST104, it goes to ST105.

Page number recording data (page number is RN) are generated at ST105.

Next at ST106, the aforementioned page number recording data that have been generated are transferred to visible page number storage area (F102b) of visible area line memory (F102).

Application Example 7

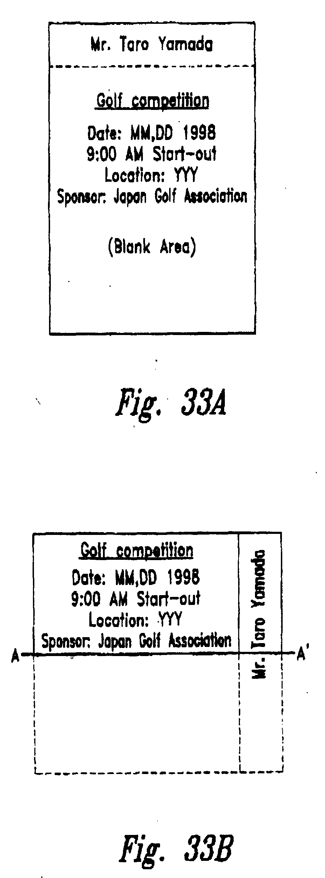

Figure 33 explains Application Example 7 of a facsimile machine of the present invention. Figure 33A shows the contents of received document (ZD), and Figure 33B explains the document output method of Application Example 7.

Application Example 7 differs from aforementioned Application Example 6 with respect to the following points. In other respects, it is the same as Application Example 6.

The facsimile machine in this Application Example 7 is constituted so that after recording (printing) of data for secret document (HD) is finished and printing of address (AT) in address recording area (R102) has been completed, double paper for receiving (R100) will be cut and output.

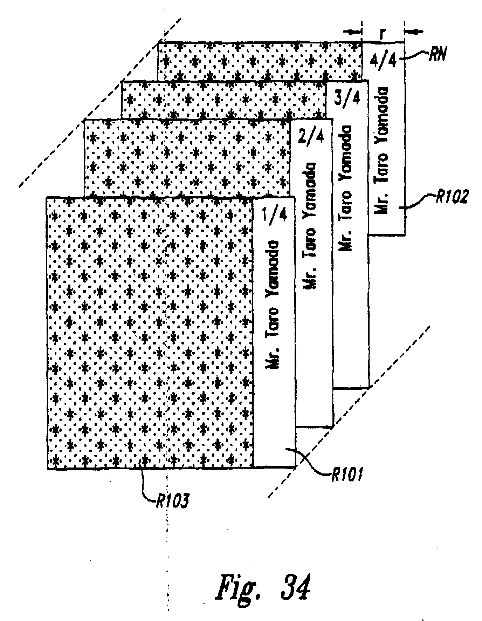

As shown in Figure 33, with this Application Example 7, address (AT) is recorded only in visible recording area (R102) and is not recorded in non-visible recording area ([R]103) on the received document, For this reason, the recording length of the first page of recording paper will be shorter. Thus, as shown in Figure 34, the first page of recording paper will be cut short, and the recording paper from the second page on will be longer.

The facsimile machine in this Application Example 7 has the following functions.

(a) A function in which, when recording (printing) of data for secret document (HD) is finished, double paper for receiving (R100) is cut to avoid wasting the facsimile receiving paper and received document (ZD) is output (cutting function when data printing is finished).

(b) A function that outputs address (AT) after printing of the address in address recording area (R102) is finished. That is, in this function, double paper for receiving (R101) is not cut and output until both data for recording non-visible area (R103) and data for recording visible area (R102) that constitute line memory (F101) are completely reproduced/recorded.

The contents of transmitted document (SD) are written to communication contents recording area (S103) and address (AT) is written to address area (S102) as described above.

In this case, with unconditional cutting at the position where recording of the received document is finished when data recording is finished by aforementioned function (a), when blank areas below document area (HD) as shown in Figure 33A are sent, received document (ZD) will be cut at line AA' in Figure 33B and output. Thus, the problem that the address is not displayed sufficiently occurs.

However, with the receiving device in Application Example 7, the aforementioned problem does not occur, since it has aforementioned function (b).

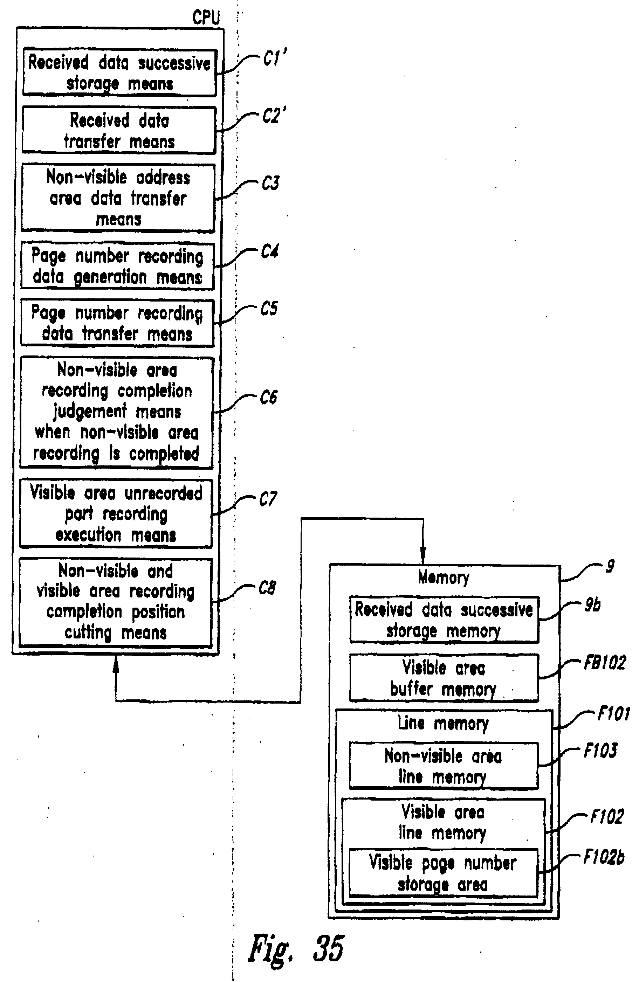

Figure 35 is a block diagram that shows functions C1', C2', C3-C5, and C7-C9 realized by the CPU and the constitution of memory (9) (refer to Figure 5A) the same as aforementioned Application Example 1.

(C7): Visible area recording completion judgment means when non-visible area recording is completed

Visible area recording completion judgment means when non-visible are recording is completed (C7) determines whether recording of address data (data stored in visible area buffer memory (FB102)) in visible recording area (R102) is completed when recording on non-visible area recording area (R103) is completed when each page of the received data is recorded on the recording paper.

(C8): Visible area unrecorded part recording execution means

Visible area unrecorded part recording execution means (C8) executes recording of unrecorded parts of address data when recording of address data (data stored in visible area buffer memory (FB102)) in visible recording area (R102) on the last page has not been completed when recording in non-visible recording area (R103) is completed when each page is recorded.

(C9): Non-visible and visible area recording completion position cutting means

Non-visible and visible area recording completion position cutting means (C9) cuts facsimile receiving paper (R100) at the position where non-visible area and visible area recording is completed when each page is recorded.

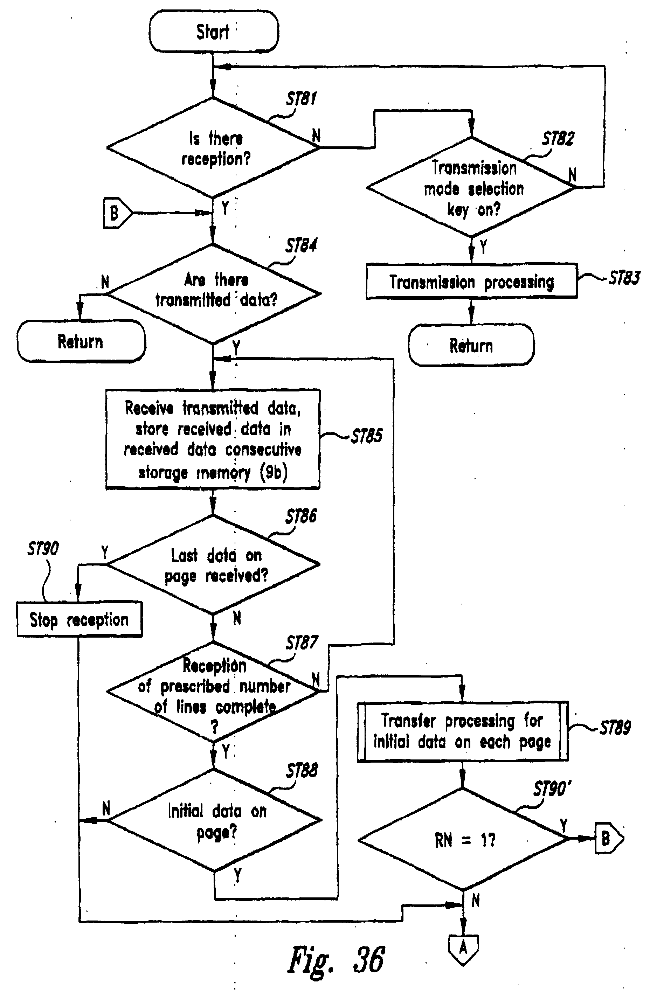

Figure 36 is a flowchart of reception processing by Application Example 7 of the facsimile machine of the present invention.

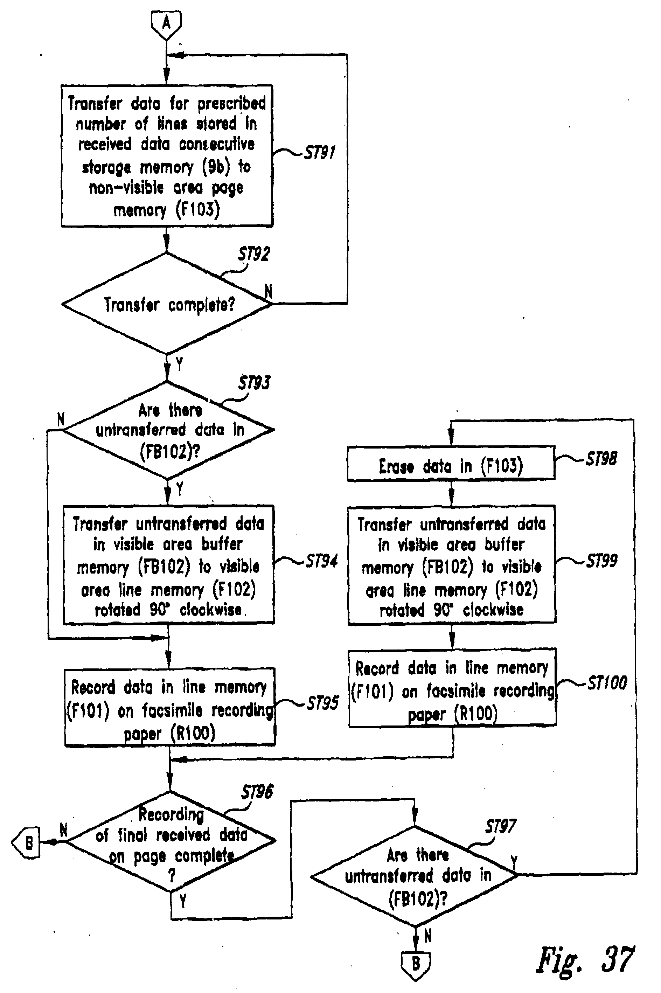

Figure 37 is a flowchart of reception processing by Application Example 7 of the facsimile machine of the present invention and is a flowchart that is a continuation of aforementioned Figure 36.

In the explanation of the flowchart in Figures 36 and 37, the same ST numbers (step numbers) are added for the same processing as the flowchart in Figure 30 for aforementioned Application Example 6, and redundant explanation will be omitted. The flowchart in Figure 36 differs from aforementioned Figure 30 with respect to the following.

In Figure 36, when processing at ST89 is completed, process control goes to ST90'. Note that processing at ST89 (transfer processing for the initial data on each page) is the same as Figure 32 for the aforementioned Application Example 6.

It is determined whether RN = 1 at ST90'. If yes (Y), process control returns to aforementioned ST84. Thus, with RN = 1, initial data on the first page of received data are only transferred to visible area buffer memory (FB102) with ST103 (refer to Figure 32)), rather than recording on facsimile receiving paper (R100). The second page of data is received at ST84, and only the second page of data is recorded.

In Figure 37, after processing of ST95, go to ST96.

It is determined whether recording of the last received data for the page has been completed at ST96. If no (N), process control returns to aforementioned ST84. If yes (Y), process control goes to ST97,

It is determined whether there are untransferred data in (FB102) at ST97. If yes (Y), process control goes to ST98.

At ST98, data in non-visible area line memory (F103) (data recorded on facsimile receiving paper (R100) in ST95 are erased.

Next, at ST99, untransferred data in visible area buffer memory (FB102) are rotated 90° and transferred to visible area line memory (F102).

Next, data in line memory (F101) are recorded on facsimile receiving paper (R100) at ST100.

Process control then returns to aforementioned ST97.

With the processing in aforementioned ST97-ST95, address data are recorded (printed) to the end in visible recording ares (R102) of facsimile receiving paper (R100).

If no (N), at ST97 (when all address data are recorded in the visible recording area), process control returns to aforementioned ST84.

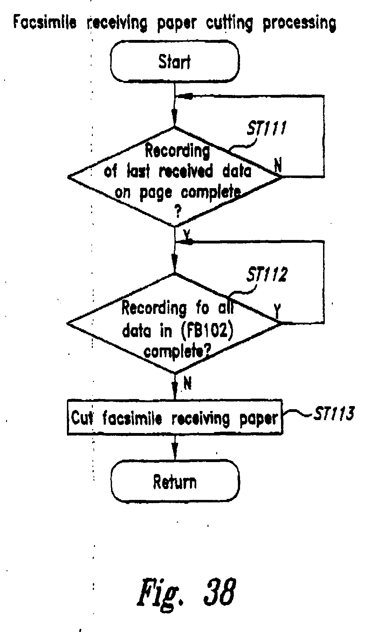

Figure 38 is a flowchart of the processes for cutting the facsimile receiving paper. Processing is started by turning on the power, and it is executed by multi-tasking in parallel with other processes.

At ST111 in Figure 38, it is determined whether recording of the last received data for the page has been completed. If no (N), ST111 is repeated. If yes (Y), process control goes to ST112.

It is determined whether recording of all data in visible area buffer memory (FB102) has been completed at ST112, If no (N), ST112 is repeated. If yes (Y), process control goes to ST113.

Facsimile receiving paper (R100) is cut at ST113.

Process control then return to ST111.

With this Application Example 7, address data on the first page are not recorded in non-visible recording area (R103), and the amount of facsimile receiving paper (R100) used is small. Also, facsimile receiving paper (R100) is cut at the position where recording of non-visible recording area (R103) and address data for visible recording area (R102) for each page is completed, so the amount of facsimile receiving paper (R100) used can be conserved.

Possibilities for use in industry

With the facsimile machine of the aforementioned invention, when someone other than the actual addressee peels shielding sheet (R104) from the surface of double paper (R100), the addressee can see that someone else has peeled off aforementioned shielding sheet (R104). Thus, someone other than the actual addressee cannot surreptitiously read the communication contents recorded in non-visible recording area (R103) of double paper for receiving (R100) without the actual addressee's knowledge. Thus it will be used conveniently in a communication system that transmits and receives secret documents. Other documents besides secret documents can also be received. Furthermore, transmission can be constituted to permit transmission like that of conventional facsimile machines.

## Claims

1. Facsimile machine which meets the following requirements (A01)-(A06):

   (A01) Secret document recording paper loading part (13a), in which is loaded facsimile receiving paper (R100) for recording secret documents, that contains recording paper (R101), recording paper (R101) that has non-visible area (R103) in which the received document, including transmission source information, can be recorded, and visible area (R102) in which the preset address area part (the received document address area part) on the first page of the aforementioned received document can be recorded and where aforementioned visible area (R102) is placed along one side of aforementioned non-visible area (R103) in the paper-feed direction, and shielding sheet (R104) that covers the non-visible area (R103) of aforementioned recording paper (R101).

   (A02) Memory (9) that has received data accumulating memory (9a) that accumulates the aforementioned received data and frame memory (F101) that records data for one page of aforementioned facsimile receiving paper (R100); aforementioned memory (9) where frame memory (F101) is constituted with non-visible area frame memory (F103) that has non-visible document recording area (F103a) and non-visible transmission source data storage area (F103b), and a visible area frame memory that has visible address storage area (F102a) and visible page number memory area (F102b).

   (A03) Received data accumulating means (C1) that accumulates the aforementioned received data in aforementioned received data storage memory (9a).

(A04) Accumulated data transfer means (C2) that transfers data stored in aforementioned received data stored memory (9a) one page at a time to non-visible document storage area (F103a) of aforementioned frame memory (F101); when recording of the data in aforementioned frame memory (F101) on aforementioned facsimile receiving paper (R100) is completed by image output device (13) and there are next data stored in aforementioned received data storage memory (9a), aforementioned accumulated data transfer means (C2) transfers the aforementioned next data to non-visible document storage area (F103a) of aforementioned frame memory (F101).

(A05) Non-visible address area data transfer means (C3) that transfers data from the non-visible document address part memory area (F103a1), which is a preset area in the data transmitted and stored in aforementioned non-visible document storage area (F103a), to visible address recording area (F102a) rotated 90°.

(A06) Image output device (13) that records data from aforementioned non-visible area frame memory (F103) to non-visible area (R103) of aforementioned recording paper (R101) and data aforementioned visible address storage area (F102a) to aforementioned visible area (R102) of aforementioned recording paper (R101); aforementioned image output device (13) where, each time data after the second page of the received data stored in aforementioned received data storage memory (9a) are transmitted to non-visible document storage area (F103a) of aforementioned frame memory (F101), data in aforementioned frame memory (F101) are recorded on aforementioned recording paper (R101) of aforementioned facsimile receiving paper (R100).

2. Facsimile machine described in Claim 1 which meets following requirements (A07) and (A08).

(A07) Page number recording data generation means (C4) that generates page number recording data for recording the page number of one page of data stored in the aforementioned frame memory in aforementioned visible area (R102) of aforementioned recording paper (R101),

(A08) Page number recording data transfer means (C5) that transfers the aforementioned page number recording data to visible page number storage area (F102b) of aforementioned frame memory (F101) before data in aforementioned frame memory (F101) is recorded on aforementioned recording paper (R101) of aforementioned facsimile receiving paper (R100) by aforementioned image output device (13).

3. Facsimile machine which meets following requirements (B01)-(B06) [sic; (B01)-(B08)].

(B01) Secret document recording paper apparatus part (13a), in which is loaded secret document recording facsimile receiving paper (R100), that contains recording paper (R101), where recording paper (R101) that has non-visible area (R103) that can record the transmitted document, including transmission source information, and visible area (R102) in which a preset area part for the first page of the aforementioned received document (received document name area part) can be recorded, and where the aforementioned visible area (R102) is placed along one side of aforementioned non-visible area (R103) in the paper-feed direction; and shielding sheet (R104) that covers non-visible area (R103) of aforementioned recording paper (R101).

(B02) Memory (9) that includes received data accumulating memory (9a) that stores the aforementioned received data and frame memory (F101) that stores one page of data for aforementioned facsimile receiving paper (R100); aforementioned memory (9) where frame memory (F101) is constituted of non-visible area frame memory (F103) that his non-visible text storage area (F103a) and non-visible transmitted data storage area (F103b), and a visible area frame memory that has visible address storage area (F102a) and visible page number storage area (F102b).

(B03) Received data storage means (C1) that stores the aforementioned received data in aforementioned received data storage memory (9a).

(B04) Accumulated data transfer means (C2) that transfers data stored in aforementioned received data storage memory (9a) one page at a time to non-visible document storage area (F103a) of aforementioned frame memory (F101); when recording of data in aforementioned frame memory (F101) on aforementioned facsimile receiving paper (R100) is completed by image output device (13) and there are next data stored in aforementioned received data stored memory (9a), aforementioned accumulated data transfer means (C2) transfers the aforementioned next data to non-visible document storage area (F103a) of aforementioned frame memory (F101).

(B05) Address part storage area detection means (C6) that has address part storage area specifying graphic storage means (C6a) that stores graphics that specify the range of non-visible document address part storage area (F103a1) from data transmitted and stored in aforementioned non-visible document storage area (F103a), and that detects non-visible document address part storage area (F103a1) from data stored in aforementioned non-visible document storage area (F103a).

(B06) Non-visible address area data transfer means (C3) that transfers the aforementioned detected data in non-visible document address part storage area (F103a1) to visible address storage area (F102a) rotated 90°.

(B07) Image output device (13) that records data from aforementioned non-visible area frame memory (F103) to non-visible area (R103) of aforementioned recording paper (R101) and records the data from aforementioned visible address storage area (F102a) to aforementioned visible area (R102) of aforementioned recording paper (R101); each time data after the second page of the received data stored in aforementioned received data stored memory (9a) is transmitted to non-visible document storage area (F103a) of aforementioned frame memory (F101), aforementioned image output device (13) records data in the aforementioned frame memory (F101) on aforementioned recording paper (R101) of aforementioned facsimile receiving paper (R100).

(B08) Image output device (13) that records data from aforementioned non-visible area frame memory (F103) to non-visible area (R103) of aforementioned recording paper (R101) and records the data from aforementioned visible address storage area (F102a) to aforementioned visible area (R102) of aforementioned recording paper (R101); each time data after the second page of the received data stored in aforementioned received data storage memory (9a) is transmitted to non-visible document storage area (F103a) of aforementioned frame memory (F101), aforementioned image output device (13) records data in the aforementioned frame memory (F101) on aforementioned recording paper (R101) of aforementioned facsimile receiving paper (R100).

4. Facsimile machine described in Claim 3 which meets the following requirements (B09) and (B010)

(B09) Page number recording data generation means (C4) that generates page number recording data for recording the page number of one page of data stored in the aforementioned frame memory in aforementioned visible area (R102) of aforementioned recording paper (R101).

(B09) [sic; (B010)] Page number recording data transfer means (C5) that transfers the aforementioned page number recording data to visible page number storage area (F102b) of aforementioned frame memory (F101) before the data in aforementioned frame memory (F101) are recorded on aforementioned recording paper (R101) of aforementioned facsimile receiving paper (R100) by aforementioned image output device (13).

5. Facsimile machine which meets the following requirements (B01)-(B06) [sic; (C01)-(C06)].

(C01) Secret document recording paper loading part (13a), in which is loaded secret document recording facsimile receiving paper (R100), that contains recording paper (R101), that is recording paper (R101) that has non-visible area (R103) in which the received document, including transmission source information, can be recorded and visible area (R102) in which a preset address area part of the first page of the aforementioned received document (received document address area part) can be recorded, and where the aforementioned visible area (R102) is placed along one side of aforementioned non-visible area (R103) in the paper-feed direction; and shielding sheet (R104) that covers non-visible area (R103) of aforementioned recording paper (R101).

(C02) Memory (9) that includes received data consecutive storage memory (9b) that sequentially receives and stores the aforementioned received data in portions of a prescribed number of lines greater than the amount of data stored in aforementioned visible area (R102) and less than one page of data, line memory (F101), where line memory (F101) stores data where the aforementioned prescribed number of lines of received data are expanded and is constituted of non-visible area frame memory (F103) and visible area frame memory (F102), and visible area buffer memory (FB102) that stores data where the aforementioned received data consecutive storage memory (9b) is expanded when the prescribed number of lines of received data stored in aforementioned received data consecutive storage memory (9b) are the initial data on each page.

(C03) Received data successive storage means (C1") that stores the aforementioned received data in aforementioned received data consecutive storage memory (9b) in units of the aforementioned prescribed number of lines.

(C04) Received data transfer means (C2) that transfers the aforementioned received data, excluding the transmission source information data, to aforementioned visible area buffer memory (FB102) and non-visible area line memory (F103) of aforementioned line memory (F101) when the data stored in aforementioned received data consecutive storage memory (9b) is the first data on each page, and that also transmits all the data stored in aforementioned received data consecutive storage memory (9b) to non-visible area line memory (F103) of aforementioned line memory (F101) when the data stored in aforementioned received data consecutive storage memory (9b) are data after the second page of each page; where each time new received data are stored in aforementioned received data consecutive storage memory (9b), aforementioned received data transfer means (C2) transfers the aforementioned new received data to aforementioned non-visible area line memory (F103) or visible area buffer memory (FB102).

(C05) Buffer data transfer means (C3) that sequentially transfers data transmitted and stored in aforementioned visible area buffer memory (FB102) to visible area line memory (F102) rotated 90°.

(C06) Image output device (13) that records data in aforementioned non-visible area line memory (F103) in non-visible area (R103) of aforementioned recording paper (R101) and that records data in aforementioned visible area line memory (F102) in aforementioned visible area (R102) of aforementioned recording paper (R101); each time received data stored in aforementioned received data memory (9b) are transmitted to aforementioned frame memory (F101), aforementioned image output device (13) stores data in aforementioned frame memory (F101) on aforementioned recording paper (R101) of aforementioned facsimile receiving paper (R100).

6. Facsimile machine described in Claim 5 which meets the following requirements (C07) and (C08).

(C07) Page number recording data generation means (C4) that generates page number recording data for recording the page number of one page of data stored in the aforementioned frame memory in aforementioned visible area (R102) of aforementioned recording paper (R101).

(C08) Page number recording data transfer means (C5) that transfers the aforementioned page number recording data to visible page number storage area (F102b) of aforementioned frame memory (F101) before data in aforementioned frame memory (F101) is recorded on aforementioned recording paper (R101) of aforementioned facsimile receiving paper (R100) by aforementioned image output device (13).

7. Facsimile machine described in Claim 5 which meets the following requirements (C09) and (C010) [sic; and (C011)].

(C09) Visible area recording completion judgment means (C6) for when non-visible area recording is completed that determines whether recording of address data (data stored in visible area buffer memory (FB102)) in visible recording area (R102) is completed, when recorded data are recorded on each page of the recording paper when recording to non-visible recording area (R103) is completed.

(C010) Visible area unrecorded part recording execution means (C7) that executes recording of unrecorded parts of address data when recording address data (data stored in visible area buffer memory (FB102)) in visible recording area (R102) on the last page has been completed, after recording to non-visible recording area (R103) is completed when all pages are recorded.

(C011) (C8) that cuts facsimile receiving paper (R100) at the position where recording of non-visible areas and visible areas is completed, when all pages are recorded.

Fig. 1

S

Mr. Taro Yamada ——S102

——S105

Golf competition

S103——

Date: MM,DD 1998
9:00 AM Start-out
Location: YYY
Sponsor: Japan Golf Association

——F101

*Fig. 2*

P1

Transceiving device 1 — SR1

p

Transceiving device g

SRg

## Fig. 3A

| Si Tranmission side | Rj Receiving side |
|---|---|

S1 — Transmitted document set | Request → Receive ready — R1

Possible responses

S2 — Transmitted document read

S3 — Data compression T4 format | Transmission → Document receipt/storage — R2

Data expansion of received document and signal processing — R3

Received document: reproduction/ storage output — R4

P1 Public communication network

## Fig. 3B

**Fig. 4A**

**Fig. 4B**

EP 1 098 509 A1

SR1 (SFX)

P1

Public communication network

10

Audio generation device *11*

Input/output operating panel

Input/output controller

*5*

Image input device *7*

CPU *8*

*8*

Image output device *13*

Secret document recording paper loading part

13a

*9* Memory

Paper cutting apparatus

13b

*Fig. 5A*

Fig. 5B

(a)    Received document ZD    (b)

(c)    Received document ZD    (d)

*Fig. 6*

Mr. Taro Yamada

Golf competition

Date: MM,DD 1998
9:00 AM Start-out
Location: YYY
Sponsor: Japan Golf Association

**Fig. 7A**

Mr. Taro Yamada

Golf competition

Date: MM,DD 1998
9:00 AM Start-out
Location: YYY
Sponsor: Japan Golf Association

Mr. Taro Yamada

**Fig. 7B**

F103b
S
AT
M
F103
M
R103a1
ZD
F103a

Mr. Taro Yamada

Golf competition

Date: MM,DD 1998
9:00 AM Start-out
Location: YYY
Sponsor: Japan Golf Association

F102b
S
F102a
F102
F101

Mr. Taro Yamada

**Fig. 8**

Golf Competition Matching

First Group          Ryutaro Nakamoto
                     Jiro Yamada
                     Tadashi Gotota
                     Masao Kamei

Second Group         Ryoichi Maeda
                     Naoto Yamamoto
                     Yoshito Harada
                     Taro Yamada

Third Group          Shigeki Kamo
                     Shintaro Tsuji
                     Ichiro Tomizaki
                     Saburo Ozawa
                                    End

**Fig. 9A**

*R103*

*R103b*

*R103a*

*R102b*

*R102*

*R102a*

Golf Competition Matching

First Group    Ryutaro Nakamoto
                Jiro Yamada
                Tadashi Gotota
                Masao Kamei

Second Group  Ryoichi Maeda
                Naoto Yamamoto
                Yoshito Harada
                Taro Yamada

Third Group   Shigeki Kamo
                Shintaro Tsuji
                Ichiro Tomizaki
                Saburo Ozawa
                         End

Mr. Taro Yamada

*Fig. 9B*

*Fig. 10*

R106

From A to B' 98 4/29 PM1:00    ~F103b

Mr. Taro Yamada    ~F103a1

Golf competition

Date: MM,DD 1998
9:00 AM Start-out
Location: YYY
Sponsor: Japan Golf Association

F103

~F103a

## Fig. 11A

R106

R103b ~ From A to B' 98 4/29 PM1:00    ~R102b

R103a1 ~ Mr. Taro Yamada

Golf competition

Date: MM,DD 1998
9:00 AM Start-out
Location: YYY
Sponsor: Japan Golf Association

R103 ~

R101 ~

Mr. Taro Yamada    From A to B' 98 4/29 PM1:00

~R106

~R102

~R102a

## Fig. 11B

Fig. 11C

CPU

Received data accumulating means — C1

Accumulated data transfer means — C2

Non-visible address area data transfer means — C3

Page number recording data generation means — C4

Page number recording data transfer means — C5

Memory — 9

Received data accumulating memory — 9a

Frame memory — F101

Non-visible area frame memory — F103

Non-visible document storage area — F103a

Non-visible document address part storage area — F103a1

Non-visible transmission source data storage area — F103b

Visible area frame memory — F102

Visible address storage area — F102a

Visible page number storage area — F102b

*Fig. 12*

**Fig. 13**

Start

ST1 — Is there reception?

N →

ST2 — Transmission mode selection key on?

N →

Y ↓

ST3 — Transmission processing

Return

Y ↓ (from ST1)

ST4 — Store received data in received data accumulating memory (9a)

ST5 — Reception finished?

N →

Y ↓

ST6 — RN = 0

ST7 — RN = RN+1

ST8 — Transfer data for page RN of received document strored in received data accumulating memory (9a) to frame memory (F101)

ST9 — Record data in frame memory (F101) on facsimile receiving paper (R100)

ST10 — All pages recorded?

N →

Y ↓

End

ST8 subroutine

```
                    ┌─────────┐
                    │  Start  │
                    └─────────┘
                         │
          ┌──────────────────────────────┐
          │ Transfer data for page RN     │
          │ stored in received data       │
          │ accumulating memory (9a)      │──── ST21
          │ to non-visible area page      │
          │ memory (F103)                 │
          └──────────────────────────────┘
                         │
                       ST22
                    ╱        ╲
                   ╱ Transfer ╲  N
                  ╱ complete? ╱ ────┐
                   ╲        ╱       │
                     ╲    ╱         │
                       │ Y          │
                     ST23           │
                    ╱        ╲  Y
                   ╱  RN = 1? ╲ ───────────────────┐
                   ╲        ╱                        │
                     ╲    ╱                          │
                       │ N                           │
                                    ┌──────────────────────────────┐
                                    │ Transfer data in non-visible  │
                                    │ document. address part        │
                                    │ storage area (F103a1) to      │──── ST24
                                    │ visible address storage area  │
                                    │ (F102a) rotated 90° clockwise │
                                    └──────────────────────────────┘
                                                   │
                                                 ST25
                                                ╱      ╲  N
                                               ╱Transfer╲ ───┐
                                               ╲complete?╱    │
                                                ╲      ╱      │
                                                   │ Y        │
          ┌──────────────────────────────┐
          │ Page number recording         │──── ST26
          │ data generation               │
          └──────────────────────────────┘
                         │
          ┌──────────────────────────────┐
          │ Transfer page number          │
          │ recording data to visible     │──── ST27
          │ page number storage           │
          │ area (F102b)                  │
          └──────────────────────────────┘
                         │
                    ┌─────────┐
                    │   End   │
                    └─────────┘
```

*Fig. 14*

Direction

Mr. Toro Yamada

Document Area HD

Direction →

← Direction

→ Direction

SD Transmitted document

Direction

*Fig. 15*

Fig. 16A

Fig. 16B

CPU

Received data
accumulating means — C1

Accumulated data
transfer means — C2

Non-visible address
area data transfer
means — C3

Page number recording
data generation means — C4

Page number recording
data transfer means — C5

Address part storage
area detection means — C6

Address part storage
area specifying graphic
storage means — C6a

Memory — 9

Received data
accumulating memory — 9a

Frame memory — F101

Non-visible area
frame memory — F103

Non-visible document
storage area — F103a

Non-visible document
address part
storage area — F103a1

Non-visible transmission
source data
storage area — F103b

Visible area
frame memory — F102

Visible address
storage area — F102a

Visible transmission
source data
storage area — F103a1

Visible page number
storage area — F102b

*Fig. 18*

Start

ST31
Is there reception? —N

Y

Store received data in received data accumulating memory (9a) —ST34

ST35
Reception finished? —N

Y

Address area detection and first-page recording processing —ST36

ST37
RN = 1? —N

Y ── B

RN = RN+1 —ST38

Transfer data for page RN of received document strored in received data accumulating memory (9a) to frame memory (F101) —ST39

A

ST32
Transmission mode selection key on? —N

Y

Transmission processing —ST33

Return

RN = RN-1 —ST38'

Transfer data for page RN of received document strored in received data accumulating memory (9a) to frame memory (F101) —ST39'

Record data in frame memory (F101) on facsimile receiving paper (R100) —ST40'

ST41'
All pages recorded? —N

Y

C

*Fig. 19A*

Fig. 19B

ST36 subroutine

Start

RN = 1 — ST51

Transfer data for page RN stored in received data accumulating memory (9a) to non-visible area frame memory (F103) — ST52

ST53 Transfer complete? N

Y

Non-visible document address area detection operation — ST54

ST55 Detected? N

Y

Transfer data in non-visible document address part storage area (F103a1) to visible address storage area (F102a) rotated 90° clockwise — ST60

ST61 Transfer complete? N

Y

A

ST57 — RN = RNE

ST56 RN = 1? N

Y

Transfer data in non-visible transmission source data storage area (F103b) to visible address storage area (F102a) rotated 90° — ST58

ST59 Transfer complete? N

Y

Fig. 20A

A

Page number recording
data (data for displaying
one page) generation — ST62

Transfer page number
recording data to visible page
number storage area (F102b) — ST63

Record data in frame
memory (F101) on facsimile
receiving paper (R100) — ST64

Return

Fig. 20B

ST39 subroutine

```
            ┌──────────┐
            │  Start   │
            └──────────┘
                 │
                 ▼
      ┌───────────────────────┐
      │ Transfer data for page RN │
      │   stored in received data │ ~ST71
      │ accumulating memory (9a)  │
      │ to non-visible area page  │
      │      memory (F103)        │
      └───────────────────────┘
                 │
                 ▼              ST72
              ╱───────╲
             ╱ Transfer ╲  N
            ╱  complete? ╱────┐
             ╲         ╱      │
              ╲───────╱       │
                 │ Y          │
                 ▼            │
      ┌───────────────────────┐
      │  Page number recording │ ~ST73
      │ data (page number is RN) │
      │      generation         │
      └───────────────────────┘
                 │
                 ▼
      ┌───────────────────────┐
      │ Transfer page number   │ ~ST74
      │ recording data to visible page │
      │ number storage area (F102b) │
      └───────────────────────┘
                 │
                 ▼
            ┌──────────┐
            │  Return  │
            └──────────┘
```

## Fig. 21

ST39' subroutine

```
          ┌─────────┐
          │  Start  │
          └─────────┘
               │
               ▼
   ┌──────────────────────────┐
   │ Transfer data for page RN │
   │  stored in received data  │──── ST71'
   │ accumulating memory (9a)  │
   │  to non-visible area page │
   │      memory (F103)        │
   └──────────────────────────┘
               │
               ▼            ST72'
            ◇──────────◇
           ╱  Transfer   ╲  N
           ╲  complete?  ╱ ──────►
            ◇──────────◇
               │ Y
               ▼
   ┌──────────────────────────┐
   │  Page number recording    │
   │  data (page number is     │──── ST73'
   │  RNE-RN+1) generation     │
   └──────────────────────────┘
               │
               ▼
   ┌──────────────────────────┐
   │  Transfer page number     │
   │ recording data to visible page │──── ST74'
   │ number storage area (F102b)│
   └──────────────────────────┘
               │
               ▼
          ┌─────────┐
          │ Return  │
          └─────────┘
```

*Fig. 22*

Fig. 23

Fig. 24

CPU

Received data consecutive storage means — C1

Accumulated data transfer means — C2

Non-visible address area data transfer means — C3

Page number recording data generation means — C4

Page number recording data transfer means — C5

Memory — 9

Received data consecutive storage memory — 9a

Frame memory — F101

Non-visible area frame memory — F103

Non-visible document storage area — F103a

Non-visible document address part storage area — F103a1

Non-visible transmission source data storage area — F103b

Visible area frame memory — F102

Visible address storage area — F102a

Visible page number storage area — F102b

*Fig. 25*

**Fig. 26**

9

9b

S

M Mr. Taro Yamada

FB102

F101

AT

M

F102b

F103

F102

S

Golf competition

Date: MM,DD 1998.
9:00 AM Start-out
Location: YYY
Sponsor: Japan Golf Association

ZD

Mr. Taro Yamada

*Fig. 27*

Mr. Taro Yamada

Document Area HD

Transmitted document SD

R102

Mr. Taro Yamada

R103

R102

Mr. Taro Yamada

R103

(a)　　Received document ZD　　(b)

*Fig. 28*

CPU

Received data consecutive storage means — C1'

Received data transfer means — C2'

Non-visible address area data transfer means — C3

Page number recording data generation means — C4

Page number recording data transfer means — C5

Memory — 9

Received data successive storage memory — 9b

Visible area buffer memory — FB102

Line memory — F101

Non-visible area line memory — F103

Visible area line memory — F102

Visible page number storage area — F102b

*Fig. 29*

Start

ST81 — Is there reception?

N → ST82 — Transmission mode selection key on?

N (loop back)

Y → ST83 — Transmission processing

Return

B → Y

ST84 — Are there transmitted data?

N → Return

Y → ST85 — Receive transmitted data, store received data in received data consecutive storage memory (9b)

ST86 — Last data on page received?

Y → ST90 — Stop reception

N → ST87 — Receipt of prescribed number of lines complete?

N (loop back)

Y → ST88 — Initial data on page?

N (loop back)

Y → ST89 — Transfer processing for initial data on each page

A

## Fig. 30

```
                        ╱A╲

                         │
                         ▼
        ┌──────────────────────────────────┐
        │  Transfer data for prescribed     │
        │  number of lines stored in        │
        │  received data consecutive        │── ST91
        │  storage memory (9b) to           │
        │  non-visible area page            │
        │  memory (F103)                    │
        └──────────────────────────────────┘
                         │
                         ▼              ST92
                    ╱─────────╲
                  ╱             ╲    N
                ╱  Transfer       ╲────────┐
                ╲  complete?      ╱         │
                  ╲             ╱           │
                    ╲─────────╱             │
                         │ Y                │
                         ▼              ST93│
                    ╱─────────╲             │
                  ╱  Are there  ╲   N        │
                ╱ untransferred  ╲──────┐   │
                ╲  data in       ╱       │  │
                  ╲  (FB102)?   ╱        │  │
                    ╲────────╱           │  │
                         │ Y             │  │
                         ▼               │  │
        ┌──────────────────────────────┐ │  │
        │  Transfer untransferred data │ │  │
        │  in visible area buffer       │ │  │
        │  memory (FB102) to visible    │── ST94
        │  area line memory (F102)      │ │  │
        │  rotated 90° clockwise        │ │  │
        └──────────────────────────────┘ │  │
                         │                │  │
                         ▼◄───────────────┘  │
        ┌──────────────────────────────┐    │
        │  Record data in line memory   │    │
        │  (F101) on facsimile receiving│── ST95
        │  paper (R100)                 │    │
        └──────────────────────────────┘    │
                         │
                         ▼
                        ╱B╲
```

*Fig. 31*

ST89 subroutine

Start

RN = RN+1 — ST101    RN Initial value is 0

ST102

N ← RN = 1?

Y

Expand initial data on page RN stored in received data accumulating memory (9b), except for transmission source information data, and transfer to visible area buffer memory (FB102) — ST103

ST104

Transfer complete? — N

Y

Page number recording data (page number is RN) generation — ST105

Transfer page number recording data to visible area line memory (F102) — ST106

Return

*Fig. 32*

59

Mr. Taro Yamada

Golf competition

Date: MM,DD 1998
9:00 AM Start-out
Location: YYY
Sponsor: Japan Golf Association

(Blank Area)

*Fig. 33A*

Golf competition

Date: MM,DD 1998
9:00 AM Start-out
Location: YYY
Sponsor: Japan Golf Association

Mr. Taro Yamada

A ———————————————— A'

*Fig. 33B*

*Fig. 34*

CPU

| Received data successive storage means | C1' |
| Received data transfer means | C2' |
| Non-visible address area data transfer means | C3 |
| Page number recording data generation means | C4 |
| Page number recording data transfer means | C5 |
| Non-visible area recording completion judgement means when non-visible area recording is completed | C6 |
| Visible area unrecorded part recording execution means | C7 |
| Non-visible and visible area recording completion position cutting means | C8 |

Memory — 9

| Received data successive storage memory | 9b |
| Visible area buffer memory | FB102 |

Line memory — F101

| Non-visible area line memory | F103 |

| Visible area line memory | F102 |

| Visible page number storage area | F102b |

*Fig. 35*

```
                    ┌─────────────┐
                    │    Start    │
                    └──────┬──────┘
                           │
                        ST81│
                     ╱──────────╲
                    ╱  Is there  ╲  N        ST82
                   ╱  reception?  ╲────────┐  ╱──────────╲
                   ╲              ╱        │ ╱ Transmission╲ N
                    ╲            ╱         └╲ mode selection╲──┐
                     ╲──────────╱           ╲  key on?     ╱   │
                          │Y                 ╲            ╱    │
            ┌──┐          │                   ╲──────────╱     │
            │B │──────────┤                        │Y         │
            └──┘          │ ST84                    │          │
                     ╱──────────╲          ┌────────────────┐ │
                    ╱  Are there ╲         │  Transmission   │─ST83
              N    ╱ transmitted  ╲        │   processing    │
           ┌──────╲    data?      ╱        └───────┬────────┘ │
           │       ╲             ╱                 │          │
   ┌───────────┐    ╲           ╱          ┌──────────────┐   │
   │  Return   │     ╲─────────╱           │   Return     │   │
   └───────────┘          │Y               └──────────────┘   │
                          │                                   │
              ┌──────────────────────┐                        │
              │ Receive transmitted   │                       │
              │ data, store received  │─ST85                  │
              │ data in received data │                       │
              │ consecutive storage   │                       │
              │ memory (9b)           │                       │
              └──────────┬───────────┘                        │
                         │ ST86                               │
  ST90          ╱──────────────╲                              │
   │       Y   ╱  Last data on   ╲                            │
   │    ┌──────╲ page received?   ╱                           │
   │    │       ╲               ╱                             │
┌─────────────┐  ╲─────────────╱                              │
│    Stop     │        │N                                     │
│  reception  │     ST87│                                     │
└──────┬──────┘  ╱──────────────╲                             │
       │        ╱  Reception of   ╲  N                        │
       │       ╱ prescribed number ╲──────┐                  │
       │       ╲ of lines complete ╱       │                  │
       │        ╲      ?          ╱    ┌───────────────┐      │
       │         ╲───────────────╱     │ Transfer       │─ST89 │
       │              │Y               │ processing for │      │
       │           ST88│               │ initial data   │      │
       │         ╱──────────╲          │ on each page   │      │
       │    N   ╱ Initial data╲        └───────┬───────┘      │
       ├───────╲  on page?    ╱             ST90'│             │
       │        ╲            ╱            ╱──────────╲    Y  ┌──┐
       │         ╲──────────╱            ╱  RN = 1?   ╲──────│B │
       │              │Y                 ╲            ╱      └──┘
       │              └──────────────────╲──────────╱
       │                                      │N
       └──────────────────────────────────────┤
                                               │
                                            ┌──┐
                                            │A │
                                            └──┘
```

## Fig. 36

**Fig. 37**

Facsimile receiving paper cutting processing

Fig. 38

# INTERNATIONAL SEARCH REPORT

| International application No. |
|---|
| PCT/JP99/01368 |

**A. CLASSIFICATION OF SUBJECT MATTER**
    Int.Cl⁶  H04N1/44

According to International Patent Classification (IPC) or to both national classification and IPC

**B. FIELDS SEARCHED**

Minimum documentation searched (classification system followed by classification symbols)
    Int.Cl⁶  H04N1/00, H04N1/32-1/36, H04N1/42-1/44

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 10-75325, A (Yuugen Kaisha SC Tsuu), 17 March, 1998 (17. 03. 98) (Family: none) | 1-7 |
| A | JP, 09-149266, A (Yuugen Kaisha SC Tsuu), 6 June, 1997 (06. 06. 97) (Family: none) | 1-7 |

☐ Further documents are listed in the continuation of Box C.  ☐ See patent family annex.

| | |
|---|---|
| * Special categories of cited documents: | "T" later document published after the international filing date or priority |
| "A" document defining the general state of the art which is not considered to be of particular relevance | date and not in conflict with the application but cited to understand the principle or theory underlying the invention |
| "E" earlier document but published on or after the international filing date | "X" document of particular relevance; the claimed invention cannot be considered novel or cannot be considered to involve an inventive step |
| "L" document which may throw doubts on priority claim(s) or which is cited to establish the publication date of another citation or other special reason (as specified) | when the document is taken alone |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 7 June, 1999 (07. 06. 99) | 22 June, 1999 (22. 06. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)